# EUROPEAN PATENT APPLICATION

(11) **EP 1 924 084 A2**
(43) Date of publication of application: **21.05.2008**
(21) Application number: 07254130.3
(22) Date of filing: 17.10.2007
(51) Int. Cl.: H04N 5/232

(54) **Imaging system and method**

(30) Priority: 14.11.2006 JP 2006307907
(71) Applicant: Sony Corporation, Minato-ku Tokyo 108-0075 (JP)
(72) Inventor: Sako, Yoichiro, Tokyo (JP); Asukai, Masamichi, Tokyo (JP); Tsuruta, Massaki, Tokyo (JP); Ito, Taiji, Tokyo (JP)
(74) Representative: DeVile, Jonathan Mark

(57) **Abstract**

An imaging system includes: an imaging section adapted to capture an image; a setup information storage section adapted to store setup information relating to the operational setup of the imaging section; a selection condition detection section adapted to detect a selection condition for selecting given setup information from the setup information storage section; an acquisition section adapted to acquire given setup information based on the selection condition; and a control section adapted to set up the operation of the imaging section based on the given setup information.

## Description

### Field of the Invention

The present invention relates to an imaging system and method. More particularly, embodiments of the present invention relate to a technique for implementing various setups relating to imaging operation.

### Background of the Invention

Apparatus have been proposed, as disclosed in Japanese Patent Laid-open Nos. Hei 8-163526, 2003-244728, 2005-269010, and 2006-67139, which incorporate various ideas in a head mount display or spectacle-type display using a plurality of cameras so as to display images according to the purpose.

A different type of apparatus has also been proposed, as disclosed in Japanese Patent Laid-open No. Hei 8-292400, which serves the same purpose by physically moving the frame of the bifocal spectacles.

### Summary of the Invention

Various respective aspects and features of the invention are defined in the appended claims. Combinations of features from the dependent claims may be combined with features of the independent claims as appropriate and not merely as explicitly set out in the claims.

The imaging apparatus (camera) parameters such as its contrast and sensitivity and the imaging specifications such as far view, near view, wide angle and telephoto have previously been determined according to the hardware configuration. These parameters and specifications are user-adjustable only within the prescribed range. No apparatus has yet to be proposed which permits selection of parameters, specifications or processing functionality according to the user's individual needs or circumstances.

In light of the above, embodiments of the present invention seek to implement an imaging system, as a digital camera, digital video camcorder or other device in a still or motion imaging apparatus, which permits its imaging functions and other characteristics to be changed to match the user's individual needs, preferences or circumstances.

An imaging system according to one embodiment of the present invention includes an imaging section adapted to capture an image and a setup information storage section adapted to store various types of setup information used to control the operation of the imaging section. The imaging system further includes a selection condition detection section adapted to detect a selection condition used to select setup information from among that stored in the setup information storage section. The imaging system still further includes a control section adapted to obtain setup information from the setup information storage section based on a selection condition detected by the selection condition detection section and set up the operation of the imaging section.

The imaging, setup information storage, selection condition detection and control sections of the imaging system are housed in an integral enclosure. That is, these sections can be implemented as a single imaging apparatus.

Alternatively, the imaging system can be configured with first and second pieces of equipment capable of communicating with each other. For example, an imaging apparatus may be used as the first piece of equipment, and a server apparatus as the second piece of equipment. In this case, at least the imaging and control sections are provided in the first piece of equipment. At least the setup information storage section is provided in the second piece of equipment. The control section in the first piece of equipment obtains the setup information from the setup information storage section in the second piece of equipment through data communication.

Alternatively, the imaging section in the imaging system may be worn on the user's body so that the imaging section captures an image in the direction of the user's vision.

The setup information is information adapted to set up the operation of an imaging lens system in the imaging section.

Further, the setup information is information adapted to set up the operation of an imaging device section in the imaging section.

Still further, the setup information is information adapted to set up the signal processing operation of an imaging signal obtained by the imaging device section in the imaging section.

Still further, the setup information is information adapted to set up functions to be enabled in the imaging section.

Still further, the setup information is image processing algorithm software adapted to be executed in the imaging section.

Still further, the setup information is information regarding whether the imaging operation is enabled or disabled in the imaging section.

The selection condition detection section detects information adapted to identify the user personally. For example, the information adapted to identify the user personally is user's biological information.

Further, the selection condition detection section detects current date/time information.

Still further, the selection condition detection section detects current position information.

Still further, the imaging system further includes an operation section allowing the user to provide operational input. The selection condition detection section detects specification information entered by the operation section.

Still further, the selection condition detection section detects user's biological status information.

An imaging method of one embodiment of the present invention is an imaging method of an imaging system including an imaging section to capture an image and a setup information storage section to store various types of setup information used to control the operation of the imaging section. The imaging method includes a selection condition detection step adapted to detect a selection condition used to select setup information from among that stored in the setup information storage section. The imaging method further includes a setup step adapted to obtain setup information based on a selection condition detected in the selection condition detection step and set up the operation of the imaging section. The imaging method still further includes an imaging step adapted to capture an image with the imaging section based on the operational setup made in the setup step.

As described above, at the time of image capture by the user with the imaging system, an embodiment of the present invention selects setup information based on a factor including personal identification of the user, date/time, location, user selection and user's bodily or emotional condition, thus setting up the imaging operation according to the selected setup information. Among setup information is imaging operation parameters, functional specifications and imaging operation software.

That is, imaging functions and processing method of a captured image are changed to suit the user's individual needs, preferences or circumstances.

The imaging system and method according to embodiments of the present invention allow for the imaging operation, at the time of image capture by the user, to be set up according to the user's individual needs, user's preferences, user's circumstances such as date/time, location and weather, and user's bodily or emotional condition.

This ensures image capture tailored to the user's preferences or circumstances, thus providing an imaging system capable of suitably meeting a diversity of user needs and circumstances.

### Brief Description-of the Drawings

Embodiments of the invention will now be described with reference to the accompanying drawings, throughout which like parts are referred to by like references, and in which:
FIGS. 1A to 1D are explanatory views illustrating appearance examples of an embodiment of the present invention;
FIGS. 2A to 2C are explanatory views illustrating configurations of an imaging system of the present embodiment;
FIG. 3 is a block diagram illustrating the imaging system of the present embodiment;
FIG. 4 is another block diagram illustrating the imaging system of the present embodiment;
FIG. 5 is a block diagram illustrating a server apparatus of the present embodiment;
FIG. 6 is an explanatory view illustrating a setup information storage section of the present embodiment;
FIG. 7 is a flowchart illustrating a setup process of the present embodiment based on user discrimination;
FIG. 8 is a flowchart illustrating a setup process of the present embodiment based on user discrimination;
FIG. 9 is a flowchart illustrating a setup process of the present embodiment according to date/time;
FIG. 10 is a flowchart illustrating a setup process of the present embodiment according to date/time;
FIG. 11 is a flowchart illustrating a setup process of the present embodiment according to position;
FIG. 12 is a flowchart illustrating a setup process of the present embodiment according to position;
FIG. 13 is a flowchart illustrating a setup process of the present embodiment according to date/time and position;
FIG. 14 is a flowchart illustrating a setup process of the present embodiment according to date/time and position;
FIG. 15 is a flowchart illustrating a setup process of the present embodiment based on user selection;
FIG. 16 is a flowchart illustrating a setup process of the present embodiment based on user selection;
FIG. 17 is a flowchart illustrating a setup process of the present embodiment according to biological status; and
FIG. 18 is a flowchart illustrating a setup process of the present embodiment according to biological status.

### Description of the Example Embodiment

An embodiment of the imaging system and method of the present invention will be described below in the following order. It should be noted that two examples will be described, one in which the imaging system is implemented with an imaging apparatus alone, and another in which the imaging system is implemented with an imaging apparatus in combination with a server apparatus.
[1. Appearance Examples of the Imaging Apparatus]
[2. Configuration Examples of the Imaging Apparatus]
[3. Setup Information and Detection of Selection Conditions]
[4. Setup Process Based on User Discrimination]
[5. Setup Process According to Date/time]
[6. Setup Process According to Position]
[7. Setup Process According to Date/time and Position]
[8. Setup Process Based on User Selection]
[9. Setup Process According to Biological Status]
[10. Effects of the Embodiment, and Modification and

### Expansion Examples]

### [1. Appearance Examples of the Imaging Apparatus]

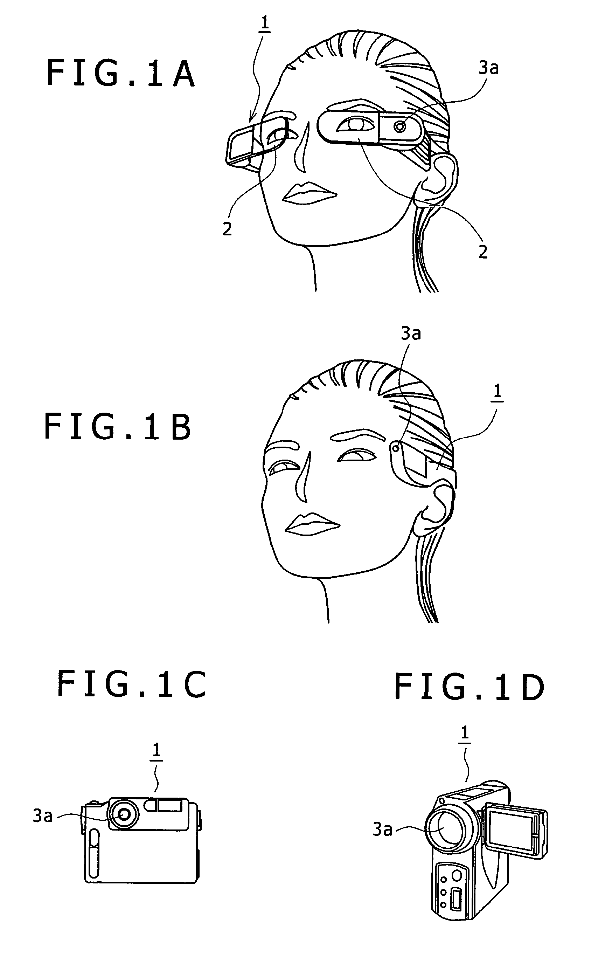

Various arrangements can be employed as an imaging apparatus 1 of the embodiment. Appearance examples of such arrangements are illustrated in FIGS. 1A to 1D.

FIG. 1A illustrates a spectacle-type display camera as the imaging apparatus 1. The imaging apparatus 1 has a wearing unit. The wearing unit has frames which, for example, wrap one-half turn around the head from the side to the back of the head. As a result, the imaging apparatus 1 is worn by the user as the frames are placed on the outer ears of the user.

The imaging apparatus 1 has an imaging lens 3a which faces forward when worn by the user so that the imaging apparatus 1 captures an image in the direction of the user's vision.

Further, when worn as illustrated, the imaging apparatus 1 is configured so that a pair of display sections 2, one for the right eye and the other for the left eye, is disposed immediately in front of the user's eyes, namely, where the lenses of ordinary eye spectacles would be. Liquid crystal panels are used, for example, as the display sections 2. By controlling the transmissivity of the display sections 2, the display sections 2 can be rendered see-through, that is, transparent or translucent as illustrated in the figure. As the display sections 2 become see-through, they cause no inconvenience in the daily life even if the user wears them at all times like spectacles.

It should be noted that only one of the display sections 2 may be provided for one of the eyes, rather than the pair of the display sections 2 for both eyes.

FIG. 1B illustrates the imaging apparatus 1 to be worn on the user's head. This imaging apparatus 1 does not include the display sections 2 as does the imaging apparatus 1 in FIG. 1A. For example, the imaging apparatus 1 is worn on the user's head using a wearing unit which can be placed on the outer ears. The imaging lens 3a is disposed to face forward with the wearing unit placed on the outer ears so that the imaging apparatus 1 captures an image in the direction of the user's vision.

FIGS. 1A and 1B illustrate examples of the imaging apparatus 1 which can be worn on the user's head using a spectacle-type or head-wearing type wearing unit. However, various other structures of the wearing unit are also possible for the user to wear the imaging apparatus 1. The wearing unit may be of any type including a headphone type, neckband type or ear-hanging type so long as it is worn by the user. Further, the imaging apparatus 1 may be worn by the user by fitting mounting hardware such as clips to ordinary spectacles, visors, headphones and so on. Still further, the imaging apparatus 1 need not be worn on the user's head.

Still further, although in the present embodiment the imaging direction is along the user's vision, the imaging lens 3a may be fitted so that an image is captured in the backward, sideward, upward or downward direction of the user. Alternatively, a plurality of imaging systems, all having the same imaging direction or each having a different imaging direction from one another, may be provided.

Still further, an imaging direction change mechanism may be provided with the one or plurality of imaging lenses 3a to manually or automatically change the subject direction.

FIG. 1C illustrates the imaging apparatus 1 in the form generally known as a digital still camera.

FIG. 1D illustrates the imaging apparatus 1 in the form generally known as a video camcorder.

The imaging apparatus 1 which is held by the user for use as illustrated in FIGS. 1C and 1D also constitutes alternative forms of the embodiment of the present invention. Although only the imaging lens 3a is shown in the figures, a panel display section, viewfinder or other display device are also provided for monitoring of the captured image.

It is needless to say that forms other than those illustrated in FIGS. 1A to 1D are also possible as the imaging apparatus for motion or still image capture. For example, equipment such as a mobile phone, PDA (Personal Digital Assistant) or portable personal computer having the functionality of an imaging apparatus may also be used as the imaging apparatus 1 of the present embodiment.

Further, in these forms of the embodiment, a microphone may be, for example, provided to collect external voice so that audio signal to be recorded together with image data can be obtained during image capture. Still further, a speaker or earphone section may be formed to produce an audio output.

Still further, a light emitting section using an LED (Light Emitting Diode) may be provided to illuminate the direction of a subject. Still further, a flash emitting section may be provided for still image capture.

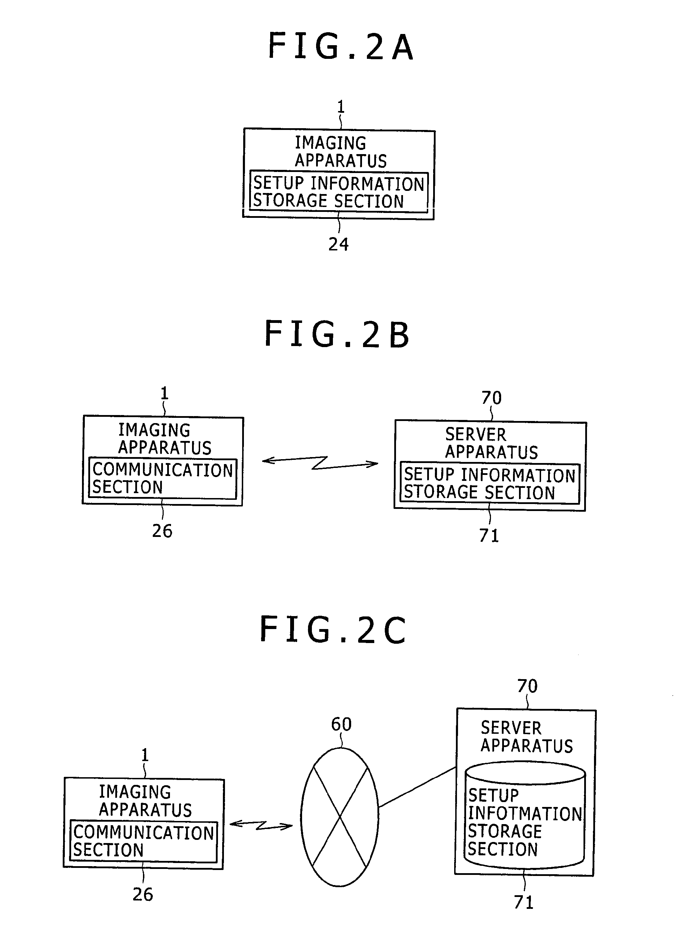

FIGS. 2A to 2C illustrate configuration examples of the imaging system of the present embodiment.

As described above, the imaging system according to an embodiment of the present invention can be implemented with the imaging apparatus 1 alone as illustrated in FIG. 2A or with the imaging apparatus 1 in combination with a server apparatus 70 as illustrated in FIGS. 2B and 2C.

FIG. 2A illustrates a case where the imaging system of an embodiment of the present invention is implemented with the imaging apparatus 1 alone. Although a detailed description thereof will be given later_, a setup information storage section 24 is accommodated in the imaging apparatus 1 to store setup information adapted to control various imaging operations. Among setup information is various operation parameters, specification information and image processing algorithm software.

The imaging apparatus 1 detects various selection conditions, selects setup information from among that in the setup information storage section 24 based on the selection condition and sets up the imaging operation.

Selection conditions are search conditions used to select setup information. Various types of information may be used as selection conditions including user identification information, date/time, position, user-selected information and user's biological status information.

FIG. 2B illustrates a case where the imaging apparatus 1 having a communication function (communication section 26 which will be described later) communicates with the server apparatus 70. In this case, the server apparatus 70 has a setup information storage section 71 to store various types of setup information.

The imaging apparatus 1 and the server apparatus 70 can communicate data with each other. The imaging apparatus 1 detects various selection conditions and transmits the detected condition to the server apparatus 70. Alternatively, the server apparatus 70 may detect selection conditions.

Then, the server apparatus 70 selects setup information from among that in the setup information storage section 24 based on the selection condition and transmits the setup information to the imaging apparatus 1. The imaging apparatus 1 sets up the imaging operation according to the setup information received.

FIG. 2C illustrates a case where the communication section 26 of the imaging apparatus 1 having a communication access function via a network 60 communicates with the server apparatus 70 connected through the network 60.

Also in this case, the imaging apparatus 1 detects various selection conditions and transmits the detected condition to the server apparatus 70. Alternatively, the server apparatus 70 may detect selection conditions. Then, the server apparatus 70 selects setup information from among that in the setup information storage section 24 based on the selection condition and transmits the setup information to the imaging apparatus 1. The imaging apparatus 1 sets up the imaging operation according to the setup information received.

It should be noted that the server apparatus 70 capable of communicating with the imaging apparatus 1 illustrated in FIGS. 2B and 2C may be made available in various manners. That is, the server apparatus 70 may be, for example, owned by the user using the imaging apparatus 1. Alternatively, the server apparatus 70 may be, for example, owned by an acquaintance of the user of the imaging apparatus 1. Still alternatively, the server apparatus 70 may belong, for example, to a public entity or private firm providing download services of setup information.

### [2. Configuration Examples of the Imaging Apparatus]

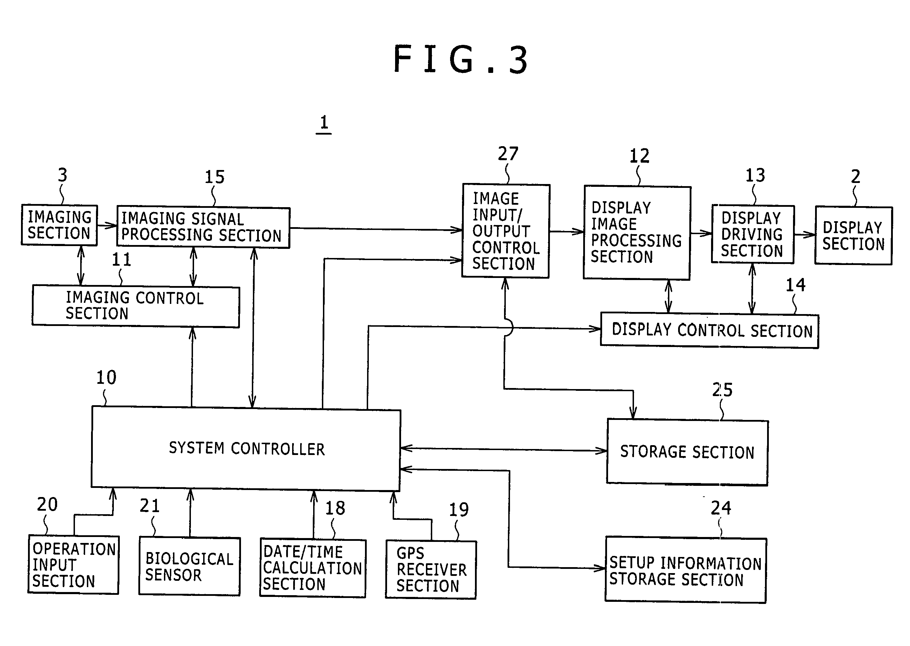

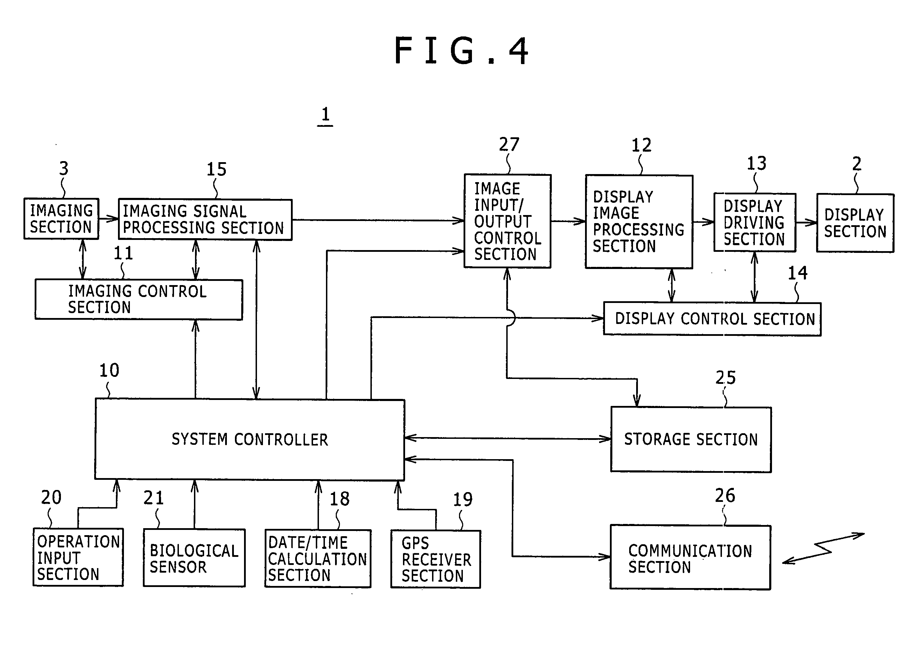

As the configuration of the imaging apparatus 1 of the present embodiment, two examples are given in FIGS. 3 and 4. FIG. 3 illustrates the configuration example of the imaging system of an embodiment of the present invention implemented with the imaging apparatus 1 alone as shown in FIG. 2A. FIG. 4 illustrates the configuration example of the imaging system of an embodiment of the present invention implemented with the imaging apparatus 1 communicating with the server apparatus 70 as shown in FIGS. 2B and 2C.

The configuration example in FIG. 3 will be described first.

A system controller 10 includes a microcomputer which has, for example, a CPU (Central Processing Unit), a ROM (Read Only Memory), a RAM (Random Access Memory), a nonvolatile memory section and an interface section. The system controller 10 serves as a control section adapted to control the imaging apparatus 1 as a whole. The system controller 10 causes each of the sections of the imaging apparatus 1 to perform a given operation based on a program stored in its ROM or other storage section.

The imaging apparatus 1 has an imaging section 3, an imaging control section 11 and an imaging signal processing section 15 to capture the image of a subject scene.

The imaging section 3 includes, for example, a lens system, driving system and solid-state imaging device array. The lens system includes the imaging lens 3a illustrated in FIGS. 1A to 1D, an aperture, zoom lens, focus lens and other components. The driving system drives the lens system to perform focusing and zooming. The solid-state imaging device array detects imaging light from the lens system and generates an imaging signal through photovoltaic conversion. A CCD (Charge Coupled Device) or CMOS (Complementary Metal Oxide Semiconductor) sensor array is used, for example, as the solid-state imaging device array.

The imaging signal processing section 15 includes a sample hold/AGC (Automatic Gain Control) circuit and a video A/D converter and obtains an imaging signal in the form of digital data. The sample hold/AGC circuit adjusts the gain of a signal obtained from the solid-state imaging devices of the imaging section 3 and shapes the signal waveform.

The imaging signal processing section 15 handles, for example, white balancing, brightness adjustment, color signal processing, and hand shake correction of the imaging signal to obtain captured image data.

Further, imaging signal processing section 15 can handle brightness level adjustment, color correction, contrast adjustment and sharpness adjustment (outline enhancement).

Still further, imaging signal processing section 15 can handle, for example, image compression, out-of-focus correction, color correction, image blurring, edge enhancement, image analysis, image recognition and image effects. Image effect processing includes creating a partially enlarged image from an imaging signal and a reduced image therefrom, image mosaicing, image brightness inversion, soft focusing, enhancement of part of the image and changing the color impression of the entire image. Image effect processing also includes creating a character image or conceptual image and combining a created image with a captured image.

The imaging control section 11 controls, based on an instruction from the system controller 10, the imaging operation accomplished by the operation of the imaging section 3 and the imaging signal processing section 15. For example, the imaging control section 11 controls on/off of the operation of the imaging section 3 and the imaging signal processing section 15. Further, the imaging control section 11 controls the operations of the imaging section 3 such as autofocusing, automatic exposure adjustment, aperture adjustment, zooming and focal point change by controlling the motor.

The imaging control section 11 also includes a timing generator. The imaging control section 11 controls the signal processing of the solid-state imaging devices and the sample hold/AGC circuit and the video A/D converter of the imaging signal processing section 15 with a timing signal generated by the timing generator. Further, this timing control makes it possible to change the imaging frame rate.

Still further, the imaging control section 11 controls the imaging sensitivity and signal processing of the solid-state imaging devices and the imaging signal processing section 15. For example, the imaging control section 11 can control the gain of the signal read from the solid-state imaging devices as imaging sensitivity control. The imaging control section 11 can also control black level setting, various parameters in the processing of signals in digital form, correction amount in the hand shake correction and so on. As for imaging sensitivity, the imaging control section 11 can handle overall sensitivity adjustment which does not particularly takes into account wavelength band. The imaging control section 11 can also handle sensitivity adjustment such as adjustment of the imaging sensitivity in a specific wavelength band (e.g., imaging adapted to cut off a specific wavelength band). Sensitivity adjustment according to wavelength can be accomplished by inserting a wavelength filter into the imaging lens system or performing wavelength filter calculations on the imaging signal. In these cases, the imaging control section 11 can handle sensitivity control, for example, by controlling the insertion of a wavelength filter or specifying a filter calculation factor.

Still further, the imaging control section 11 controls the image processing operation of the imaging signal processing section 15 based on an instruction from the system controller 10.

When supplied with setup information (e.g., parameters, specification information, algorithm software) from the system controller 10, the imaging signal processing section 15 performs setup of various imaging operations and other necessary control.

An imaging signal (image data resulting from imaging), obtained as a result of image capture by the imaging section 3 and processed by the imaging signal processing section 15, is supplied to an image input/output control section 27.

The image input/output control section 27 controls image data transfer under the control of the system controller 10. That is, image input/output control section 27 controls image data transfer between the imaging signal processing section 15, a display image processing section 12 and a storage section 25.

For example, the image input/output control section 27 supplies, under the control of the system controller 10, image data, processed by the imaging signal processing section 15 as an imaging signal, to the storage section 25 for recording purposes or to the display image processing section 12 so as to display the image for monitoring of the captured image.

Further, image input/output control section 27 can supply image data, reproduced by the storage section 25, to the display image processing section 12 to display the reproduced image.

The storage section 25 records and reproduces data to and from a given recording medium. For example, the storage section 25 is implemented as an HDD (Hard Disk Drive). Naturally, various types of storage media can be used as a recording medium, including flash memory and other solid-state memories, memory card incorporating a solid-state memory, optical disk, magneto-optical disk and hologram memory. The storage section 25 need only be configured to record and reproduce data to and from the recording medium used.

The storage section 25 records, under the control of the system controller 10, image data in the form of motion or still image obtained from image capture, to the recording medium. That is, the storage section 25 encodes the image data supplied via the image input/output control section 27 for recording to the recording medium. Then, the storage section 25 records the image data to the recording medium.

Further, the storage section 25 can reproduce recorded image data under the control of the system controller 10. Reproduced image data is supplied to the display image processing section 12 via the image input/output control section 27.

Although not shown in any of the figures, image data reproduced by the storage section 25 can be output to external equipment by a given interface section for display on an external monitoring apparatus. Alternatively, such reproduced image data can be recorded to external storage equipment.

The imaging apparatus 1 includes the display sections 2, the display image processing section 12, a display driving section 13 and a display control section 14 as illustrated in FIG. 3 for the cases illustrated in FIGS. 1A, 1C and 1D. That is, the imaging apparatus 1 is configured as described above when the display sections 2 are disposed in front of the user's eyes as illustrated in FIG. 1A. The imaging apparatus 1 is also configured as described above when the imaging apparatus 1 includes a display section or viewfinder for monitoring of the captured or reproduced image as illustrated in FIGS. 1B and 1C. It should be noted that the imaging apparatus 1 is not configured as described above when there is no display section as illustrated in FIG. 1B.

The display image processing section 12 is supplied, under the control of the system controller 10, with image data captured by the imaging section 3 and processed by the imaging signal processing section 15 (namely, image data being captured) via the image input/output control section 27. The display image processing section 12is similarly supplied with image data read from the storage section 25 (namely, image data reproduced from the recording medium).

The display image processing section 12 handles signal processing required to display supplied image data on the display sections 2 (e.g., brightness level adjustment, color correction, contrast adjustment, sharpness adjustment (outline enhancement)). The display image processing section 12also handles processing such as screen splitting and combining of character images.

The display driving section 13 includes a pixel driving circuit adapted to display an image signal from the display image processing section 12 on the display section 2 which is, for example, a liquid crystal display. That is, the display driving section 13 applies a drive signal based on the image signal to each of the pixels disposed in matrix form in the display section 2 at given horizontal and vertical drive timings, thus allowing the image signal to be displayed.

For the form of the embodiment as illustrated in FIG. 1A, the display driving section 13 controls the transmissivity of the pixels of the display section 2, thus rendering the display section 2 see-through.

The display control section 14 controls the processing performed by the display image processing section 12 and the operation of the display driving section 13 based on an instruction from the system controller 10. That is, the display control section 14 causes the display image processing section 12 to perform the above-described processing. Further, the display control section 14 controls the display driving section 13 to switch it between a see-through state and an image display state.

The imaging apparatus 1 has an operation input section 20 for user operations.

The operation input section 20 may have, for example, keys, dials or other controls to detect user operations in the form of key operations. Alternatively, the operation input section 20 may detect user's conscious actions.

If controls are provided, it is only necessary to form those controls adapted to turn the power on and off, start and stop imaging, start and stop reproduction and make search, operate the image capture system (e.g., issuing instructions to perform zooming and signal processing), manipulate menus and perform operations for selections (e.g., operations for selecting setup information which will be described later).

On the other hand, if not constructed to permit ready provision of a number of controls as illustrated in FIGS. 1A and 1B, the imaging apparatus 1 is preferably configured to detect the user's actions. In this case, acceleration, angular velocity, vibration, pressure or other types of sensors may be provided.

For example, an acceleration or vibration sensor is used to detect the user tapping on the side of the imaging apparatus 1 as illustrated in FIG. 1A. As a result, if the horizontal acceleration exceeds a given level, the system controller 10 can recognize these taps as user operations. For example, a single tap may mean to start imaging, and two taps to terminate it. Further, if it can be detected with an acceleration or vibration sensor whether the user taps on the right or left side portion (portion equivalent to the sidepiece of spectacles), a discrimination can be made therebetween so that each tap represents a given operation.

Further, by detecting, for example, the user turning his/her head or swinging his/her neck with an acceleration or angular velocity sensor, the system controller 10 can recognize the user's action as a user operation.

Still further, if a pressure sensor is provided, one each, on the left and right side portions (portions equivalent to the sidepieces of spectacles) of the imaging apparatus 1, for example, it is possible to recognize the pressing of the right side portion with a finger as zooming in the telephoto direction and the pressing of the left side portion as zooming in the wide angle direction.

Naturally, user operations may be detected with acceleration, angular velocity, vibration, pressure or other sensors even if the imaging apparatus 1 is configured as illustrated in FIG. 1C or 1D.

The operation input section 20 supplies information from controls or acceleration, angular velocity, vibration, pressure or other sensors to the system controller 10 as described above. The system controller 10 detects user operations based on these pieces of information.

It should be noted that the system controller 10 may recognize detection information from a biological sensor 21, which will be described next, as user's operational inputs. Among possible examples of user's conscious actions are eye motions (change in light-of-sight direction and winks). For example, a vision sensor, which will be described later, may be used to detect winks, and three winks may represent a specific operational input.

As for powering on and off the imaging apparatus 1, a power on/off control may be provided. However, the same purpose can also be achieved if the system controller 10 automatically powers on the imaging apparatus 1 upon detecting with a biological sensor that the user has worn the imaging apparatus 1 and automatically powers off the imaging apparatus 1 upon detecting that the user has removed the imaging apparatus 1.

The biological sensor 21 detects user's biological information. Among biological information is pulse rate, heart rate, electrocardiogram information, myogenic potential, respiratory information (e.g., respiratory speed and depth, ventilation amount), perspiration, GSR (Galvanic Skin Response), blood pressure, blood oxygen saturation, skin surface temperature, electroencephalogram (e.g., α, β, θ and δ wave information), bloodstream change, eye condition and fingerprints.

For example, to detect galvanic skin response, electrocardiogram response, myogenic potential, heart rate, pulse rate, bloodstream, blood pressure, electroencephalogram, perspiration or body temperature, it would be possible to use a sensor which is disposed on the inner side of the wearing frame illustrated in FIG. 1A or 1B so as to come in contact with the side or back of the user's head. It would also be possible to use a sensor which is disposed separately from the wearing frame and attached so as to come in contact with other part of the user's body.

In the case of the imaging apparatus 1 held in hand by the user as illustrated in FIGS. 1C and 1D, fingerprint patterns, pulse rate, perspiration, GSR, bloodstream change or body temperature, for example, can be detected by a sensor disposed at a portion of the imaging apparatus 1 which comes in contact with the user's hand.

Alternatively, an imaging section may be used which captures the image of the user's skin. A sensor capable of sensing a change in skin tone may be used as this imaging section.

On the other hand, a sensor adapted to detect the user's vision can be formed with a vision sensor including an imaging section. This imaging section is disposed near the display sections 2, for example, in the imaging apparatus 1 configured as illustrated in FIG. 1A so as to capture the image of the user's eye region. In this case, the image of the user's eye region captured by the imaging section is analyzed. This makes it possible to detect the line-of-sight direction, focal distance, opening of the pupils, eyeground pattern and opening and closing of the eyelids. Alternatively, a sensor adapted to detect the user's vision can also be formed with a light emitting section and a light receiving section disposed near the display sections 2. The light emitting section irradiates light onto the user's eye region. The light receiving section receives light reflected by the eye region. For example, the user's lens thickness can be detected from a light reception signal.

The biological sensor 21 supplies detection result information from these required sensors to the system controller 10.

Examples have been described above including acceleration, angular speed or vibration sensors as the operation input section 20. These types of sensors allow for detection of user's body motion, head motion, center of gravity, walking or running rhythm and so on. In the description of the operation input section 20, it was stated that user "operations" in the form of user's conscious actions are detected by the above types of sensors. However, user's actions such as body motion, head motion, center of gravity, walking or running rhythm, of which the user is not aware as "operations" may be detected, for example, with an acceleration sensor for use as a piece of biological information.

The imaging apparatus 1 also includes a date/time calculation section 18 and a GPS (Global Positioning System) receiver section 19.

The date/time calculation section 18 calculates the date and time (year, month, day, hours, minutes and seconds) and outputs current date/time information to the system controller 10.

The GPS receiver section 19 receives radio wave from a GPS satellite and outputs latitude and longitude information to the system controller 10 as the current position.

The setup information storage section 24 stores various types of setup information. The system controller 10 can select and read setup information from the setup information storage section 24.

The setup information storage section 24 may be formed with a nonvolatile storage medium such as HDD or flash memory. Alternatively, the setup information storage section 24 may be implemented with part of the storage area of the storage section 25.

Setup information includes various parameters, specification information and algorithm software. Specific examples thereof and selection conditions therefor will be described later. The system controller 10 controls the setup of the image capture system (hereinafter the imaging section 3, the imaging signal processing section 15 and the imaging control section 11 referred to collectively as the "image capture system") based on selectively read setup information. That is, the system controller 10 ensures that the image capture system performs imaging operation and enables its functions based on selected setup information.

As described later, the system controller 10 detects information from the operation input section 20, the biological sensor 21, the date/time calculation section 18 or the GPS receiver section 19 as a selection condition. Based on the selection condition, the system controller 10 reads setup information from the setup information storage section 24 and sets up the image capture system based on the read setup information.

Next, a configuration example of the imaging apparatus 1 shown in FIGS. 2B and 2C is illustrated in FIG. 4. It should be noted that, in FIG. 4, the identical components as those in FIG. 3 are designated with the same numerals and description thereof will be omitted. In the configuration example in FIG. 4, the imaging apparatus 1 includes the communication section 26 rather than the setup information storage section 24.

The communication section 26 exchanges data with the server apparatus 70 shown in FIGS. 2B and 2C. For example, the communication section 26 may be compliant with a wireless LAN or Bluetooth standard and establish network communication through a short-range wireless communication to a network access point (case shown in FIG. 2C). Alternatively, the communication section 26 may establish direct wireless communication with the server apparatus 70 having a suitable communication function (case shown in FIG. 2B).

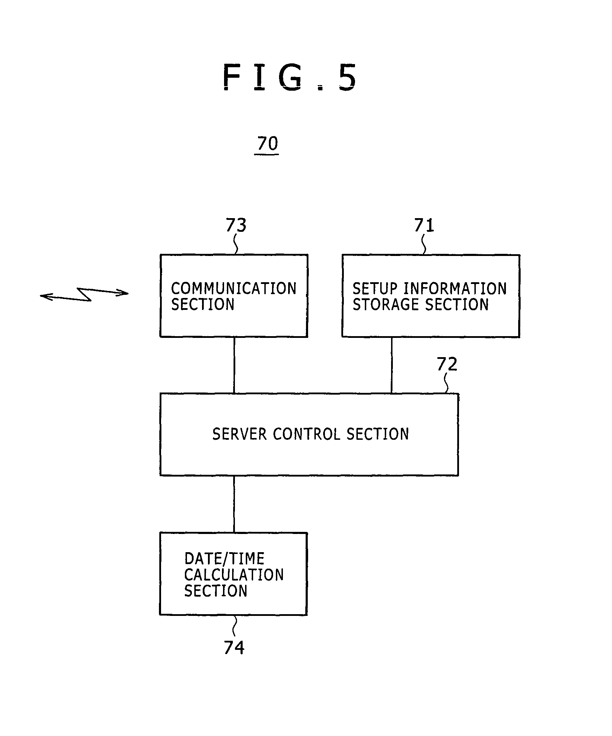

For the imaging apparatus 1 configured as described above, the server apparatus 70 is configured as illustrated in FIG. 5. That is, the server apparatus 70 includes a server control section 72, the setup information storage section 71, a communication section 73 and a date/time calculation section 74.

The setup information storage section 71 is implemented, for example, with an HDD and stores a variety of setup information.

The communication section 73 communicates data with the communication section 26 of the imaging apparatus 1 directly or via a network.

The server control section 72 provides operational control of the server apparatus 70. More specifically, the server control section 72, for example, communicates with the imaging apparatus 1, retrieves setup information from the setup information storage section 71 and downloads setup information to the imaging apparatus 1.

The date/time calculation section 74 serves as a so-called clock section to calculate the date and time (year, month, day, hours, minutes and seconds) and notifies current date and time information to the server control section 72.

The system controller 10 of the imaging apparatus 1 communicates data with the server apparatus 70 configured as described above to download setup information.

The system controller 10 detects information from the operation input section 20, the biological sensor 21, the date/time calculation section 18 or the GPS receiver section 19 as a selection condition. Then, the system controller 10 uses the communication section 26 to transmit the selection condition to the server apparatus 70. It should be noted that if the current date and time is the only selection condition, this condition may be generated by the server apparatus 70 (detected by the date/time calculation section 74).

In the server apparatus 70, the server control section 72 reads setup information from the setup information storage section 71 according to the selection condition and downloads the setup information to the imaging apparatus 1.

In the imaging apparatus 1, upon downloading of the setup information, the system controller 10 sets up the image capture system based on the downloaded setup information.

Although specific configuration examples of the imaging apparatus 1 were shown in FIGS. 3 and 4, more various configuration examples of the imaging apparatus 1 are possible.

In FIGS. 3 and 4, for example, external sounds may be collected so that audio data is recorded to the storage section 25 together with captured image data.

In this case, an audio reproduction system, speaker section, earphone section or other section may be provided to reproduce and output audio data to be reproduced by the storage section 25.

Alternatively, the imaging apparatus 1 may include both configurations illustrated in FIGS. 3 and 4. That is, the imaging apparatus 1 may include not only the setup information storage section 24 adapted to acquire setup information within the apparatus itself but also the communication section 26 adapted to acquire setup information from the setup information storage section 71.

It should be noted that although the operation input section 20, the biological sensor 21, the date/time calculation section 18 and the GPS receiver section 19 were given as components adapted to detect a selection condition, these components need not always be provided. Instead, they may be provided selectively according to the operation performed to detect selection a condition. Alternatively, other detection section may be provided.

### [3. Setup Information and Detection of Selection Conditions]

Specific examples of setup information will be given below.

Possible setup information includes parameters, specification data (data of functions to be enabled) and algorithm software and serves as operational control information of the image capture system. The system controller 10 acquires these pieces of information and sets up the operation of the image capture system.

If setup information is a parameter, the system controller 10 specifies an operational parameter to set to the image capture system. This sets up the operation of the image capture system.

Specification data specifies an operational function to be enabled in the image capture system. If the system controller 10 obtains specification data as setup information, the system controller 10 instructs the image capture system to enable (or disable) the function indicated by the specification data.

If setup information is algorithm software, the system controller 10 instructs the imaging control section 11 or the imaging signal processing section 15 to load the algorithm software, thus allowing for processing to be performed based on the software. Alternatively, the system controller 10 may, in place of the imaging signal processing section 15, perform arithmetic operations of image data based on the algorithm software.

The following are possible as setup information:
* Parameters to set up the operation of the imaging lens system of the imaging section 3
   - Parameter to specify the telephoto level for telephoto imaging
   - Parameter to specify the wide angle level for wide-angle imaging
   - Parameter to specify the variable range of zooming from telephoto to wide angle
   - Parameter to specify the focal depth
* Parameters adapted to set up the operation of the imaging device section of the imaging section 3
   - Parameter to specify the imaging sensitivity
   - Parameter to specify the shutter speed
   - Parameter to set the ultraviolet imaging sensitivity
   - Parameter to set the infrared imaging sensitivity
   - Parameter to specify the frame rate
* Parameters to set up the signal processing operation of the imaging signal processing section 15 to be performed on an imaging signal from the imaging device section of the imaging section 3
   - Brightness setting parameter
   - Color tone setting parameter
   - Parameter to specify the contrast level
   - Parameter to specify the sharpness level
* Functional information to set up functions to be enabled (specification data)
   - Specification data to enable/disable the telephoto imaging function
   - Specification data to enable/disable the wide-angle imaging function
   - Specification data to enable/disable the near view imaging function
   - Specification data to enable/disable the mid-view imaging function
   - Specification data to enable/disable the far view imaging function
   - Specification data to enable/disable the autofocus function
   - Specification data to enable/disable the highspeed imaging function
   - Specification data to enable/disable switching between motion and still imaging
   - Specification data to enable/disable the night vision imaging (infrared imaging) function
   - Specification data to enable/disable the ultraviolet imaging function
* Functional information to enable/disable imaging (specification data)
   - Specification data to enable/disable imaging operation itself
   - Specification data to enable/disable one or a plurality of specific functions (e.g., deactivate only the night vision imaging)
* Image processing algorithm software
   - Image compression program
   - Out-of-focus correction program
   - Color correction program
   - Image blurring program
   - Edge enhancement program
   - Image analysis program
   - Image recognition program
   - Image effect program
   - Operation control program suited for image recognition and other processing (e.g., operation control program adapted, for example, to apply specific image effects or perform motion-tracking operation)
   Although the above examples are possible for use as setup information, various other types of information can also be used as setup information.
   The imaging apparatus 1 sets up the imaging operation based on setup information selected from among that described above. The system controller 10 detects a selection condition required to select appropriate setup information. Then, one or a plurality of pieces of setup information are read from the setup information storage section 24 (71) and supplied to the system controller 10. The system controller 10 proceeds with the setup of the image capture system based on setup information acquired as described above.
   The system controller 10 detects selection conditions based on information from the operation input section 20, the biological sensor 21, the date/time calculation section 18 and the GPS receiver section 19.
   Among possible selection conditions to be detected are information identifying the user personally, current date/time information, current position information, information specified by operational input and user's biological status information.
   A description will be made below about these selection conditions.
* Information identifying the user personally
   For example, we consider setting up the imaging operation properly in accordance with the user's personal preferences about image capture, image capture skills, frequency of use, taste for image capture and so on. As a result, we find that it is suitable to change the imaging operation setup on a user-by-user basis. In this case, we need only to detect information which identifies the user personally as a selection condition.
   One possible example of user's personal identification information is a code number serving as a personal identification number or other user ID assigned to each user. In this case, the user enters the code number of his/her user ID from the operation input section 20 prior to using the imaging apparatus 1, and the system controller 10 detects the code number.
   On the other hand, if the imaging apparatus 1 is configured to communicate with the server apparatus 70 and if the server apparatus 70 must deal with a number of the imaging apparatuses 1, a code number uniquely assigned to the imaging apparatus 1 itself (e.g., serial number or manufacturing number) may be used as user identification information.
   Further, particularly suitable for use as user's personal identification information is biological information obtained by the biological sensor 21. Among possible detection targets for the biological sensor 21 are pulse rate, heart rate, electrocardiogram information, myogenic potential, respiratory information (e.g., respiratory speed and depth, ventilation amount), perspiration, GSR (Galvanic Skin Response), blood pressure, blood oxygen saturation, skin surface temperature, electroencephalogram (e.g., α, β, θ and δ wave information), bloodstream change, and eye condition (e.g. fundus pattern or blinking pattern). One or a combination of a plurality of pieces of the above information can be combined to form information that allows for personal identification of the user. For example, by using pieces of information such as fingerprints, pulse rate, respiratory action, eyeground pattern and lens thickness individually or in combination with each other, it is possible to generate information which allows for identification of the user actually using the imaging apparatus 1.
   It should be noted that user's personal identification information based on such biological information is not only suitable for use but also more accurate in that there is no need for the user to enter his/her code or other number.
* Current date/time information
   It would be possible to set up the imaging operation properly in accordance with a specific time, specific week, specific day, specific period, specific season, or with morning, afternoon, evening or night.
   In this case, it is only necessary to detect the year, month, day, hours, minutes and seconds with the date/time calculation section 18 (or the date/time calculation section 74 of the server apparatus 70) as current date and time and use this information as a condition for selecting setup information.
* Current position information
   It would be possible to set up the imaging operation properly in accordance with the user's location. Among specific locations of the user are not only facilities such as a park, amusement park, sports stadium, theme park, museum, concert hall, store, event site and station, but also a specific tourist spot, specific city, town or village, and a specific district.
   Further, other than specific locations, it would also be possible to set up the imaging operation properly in accordance with the environment of the user's location, including a seashore, mountainous region, highland, urban area or highway.
   To accomplish this, it is only necessary to use position information detected by the GPS receiver section 19 as a condition for selecting setup information.
* Information specified by operation input
   For example, the user may like to set up the imaging operation to suit his/her fancy. To accomplish this, it is only necessary to have available setup information selectable by the imaging system and prompt the user to make a selection.
   In this case, the system controller 10 uses information specified by the selection made with the operation input section 20.
   For example, the imaging system may have available those setups to the liking of photographers A, B and C, in the form of sets of parameters relating to the imaging and image processing operation. The imaging system presents these setups to the user for selection.
   Alternatively, the imaging system may have available setups in the form of sets of parameters tailored to different imaging qualities of different camera manufacturers. The imaging system presents these setups to the user for selection.
   Still alternatively, the imaging system may have available setups in the form of sets of parameters associated with sex or age. The imaging system presents these setups to the user for selection.
   For example, the system controller 10 displays options in the form of selection menus on the display section 2 of the imaging apparatus 1. The user confirms options and selects an option. Then, the system controller 10 obtains setup information associated with information specified by the option and proceeds with setup of the image capture system. For example, if the user selects the setup of photographer A, the image capture system will be set up as recommended by photographer A (or to achieve image capture in the style of photographer A).
* User's biological status information

It would be possible to set up the imaging operation according to the user's bodily or emotional condition. For example, the imaging operation setup may be changed according to the user's emotion such as enjoyment, fun, joy, sadness, fear, peacefulness, nostalgia, impression, astonishment, excitement or tension. The imaging operation setup may also be changed according to the user's action such as being at rest, walking, running, exercising or sleeping.

The aforementioned various types of biological information detected by the biological sensor 21 allow for estimation of the user's bodily or emotional condition. For example, a change in biological information value (e.g., variation of electroencephalogram, perspiration, respiratory rate, heart rate, blood pressure or eye condition) can be observed with change in the user's emotion or as a result of tension, excitement or comfort. This makes it possible to estimate the user's emotion.

Further, if the biological sensor 21 (or the operation input section 20) includes a sensor such as acceleration, angular velocity or vibration sensor, the user's bodily motion can be estimated based, for example, on the detected vibration, acceleration or angular velocity.

Therefore, the system controller 10 would be able to use biological status information as a selection condition by generating such information through estimation and determination of the user's emotional or bodily condition based on biological and other information from the biological sensor 21.

The imaging apparatus 1 of the present embodiment selects setup information based, for example, on the selection conditions described above to set up the image capture system.

Here, a description will be made about information stored in the setup information storage section 24 of the imaging apparatus 1 and the setup information storage section 71 of the server apparatus 70.

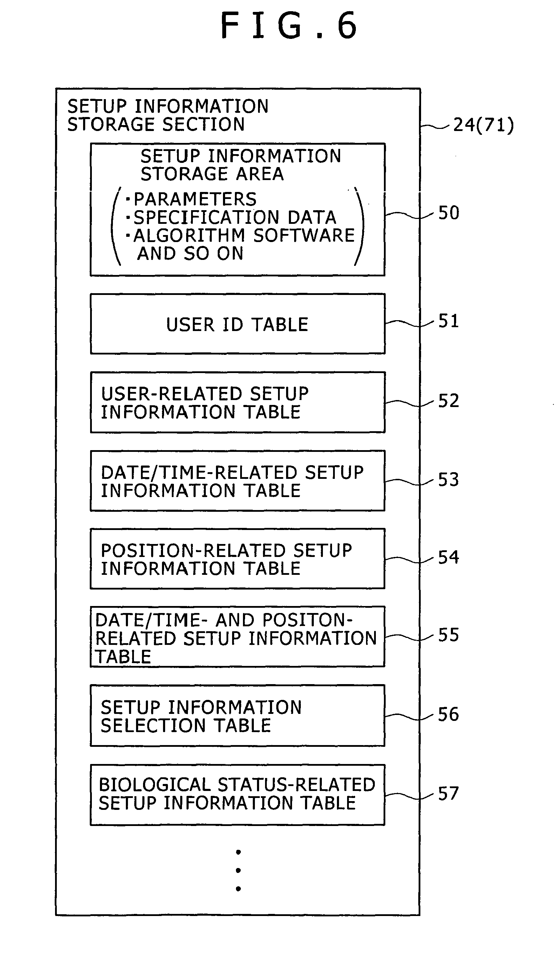

FIG. 6 illustrates types of information stored in the setup information storage section 24 (71).

The setup information storage section 24 (71) has a setup information storage area 50 formed therein. The aforementioned various types of setup information (e.g., parameters, specification data, algorithm software) are stored in this area.

In addition to setup information, the setup information storage area 50 contains a variety of tables to identify setup information based on selection conditions.

FIG. 6 shows a user ID table 51, a user-related setup information table 52, a date/time-related setup information table 53, a position-related setup information table 54, a date/time- and position-related setup information table 55, a setup information selection table 56 and a biological status-related setup information table 57.

The user ID table 51 stores user IDs, one assigned to each user, and users' personal identification information (user identification information) associated with the user IDs. A user ID refers to an ID assigned to each of the users who have registered their favorite setup. Users' personal identification information (user identification information) refers to information identifying each of the users personally which has been generated as described above based on their biological information.

That is, if user's personal identification information is generated based on his/her detected biological information, his/her user ID can be found by referring to the user ID table 51.

User ID itself may be entered as identification information associated with the user as described above. However, if one attempts to identify an individual (user ID) based on biological information, the user ID table 51 may be provided as described above the user ID can be found from biological information.

The user-related setup information table 52 shows user IDs and their associated setup information. As described above, a user ID is an ID assigned to each of the users who have registered their favorite setup. This table shows setup information that provides the setup to the liking of the user in association with the user ID. For example, the table stores pointers for designating the setup information into the setup information storage area 50 in association with respective user IDs.

The date/time-related setup information table 53 shows setup information in association with specific dates and times (e.g., time, week, day, period, season, morning, afternoon, evening or night).

The position-related setup information table 54 shows setup information in association with specific or unspecific positions and environments.

The date/time and position-related setup information table 55 shows setup information in association with combinations of date/time and position.

The setup information selection table 56 is intended for use when information specified by operation input is used as a search condition. This table shows user-selectable options and their associated setup information.

The biological status-related setup information table 57 is intended for use when biological status information is used as a search condition. This table shows biological status information and its associated setup information.

These tables make it possible to find setup information associated with a selection condition, thus allowing to read that setup information from the setup information storage area 50.

It should be noted that other selection conditions are also possible. In this case, it is only necessary to prepare tables tailored to the selection conditions used.

### [4. Setup Process Based on User Discrimination]

A description will be made below about setup processes performed in accordance with the aforementioned various selection conditions as actual examples. It should be noted that two examples will be given for each type of selection conditions. In one example relating to FIG. 2A, the setup is accomplished with the imaging apparatus 1 (case in which, according to an embodiment of the present invention, the imaging system is implemented with the imaging apparatus 1 alone). In another example relating to FIGS. 2B and 2C, the setup is accomplished with the imaging apparatus 1 illustrated in FIG. 4 and the server apparatus 70 illustrated in FIG. 5 (case in which, according to an embodiment of the present invention, the imaging system is implemented with the imaging apparatus 1 in combination with the server apparatus 70).

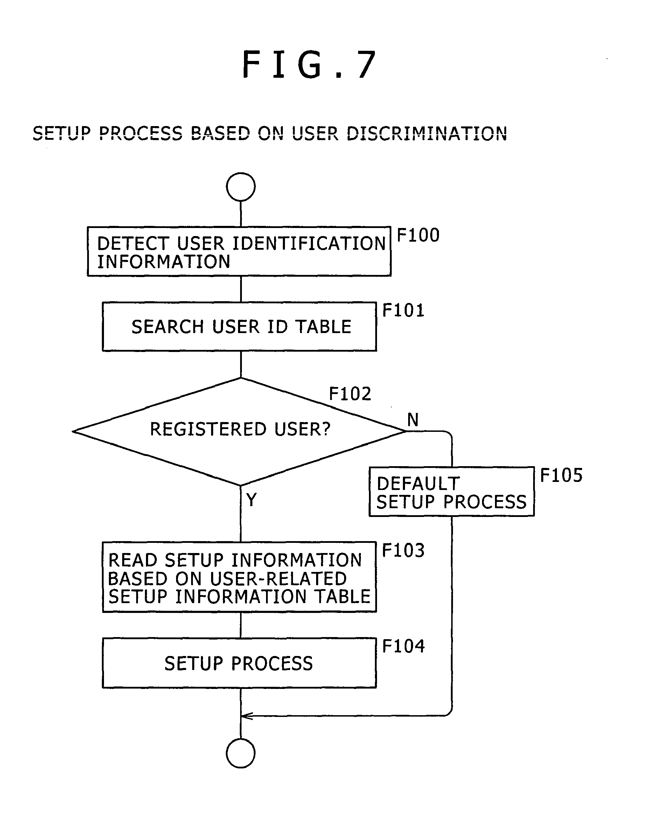

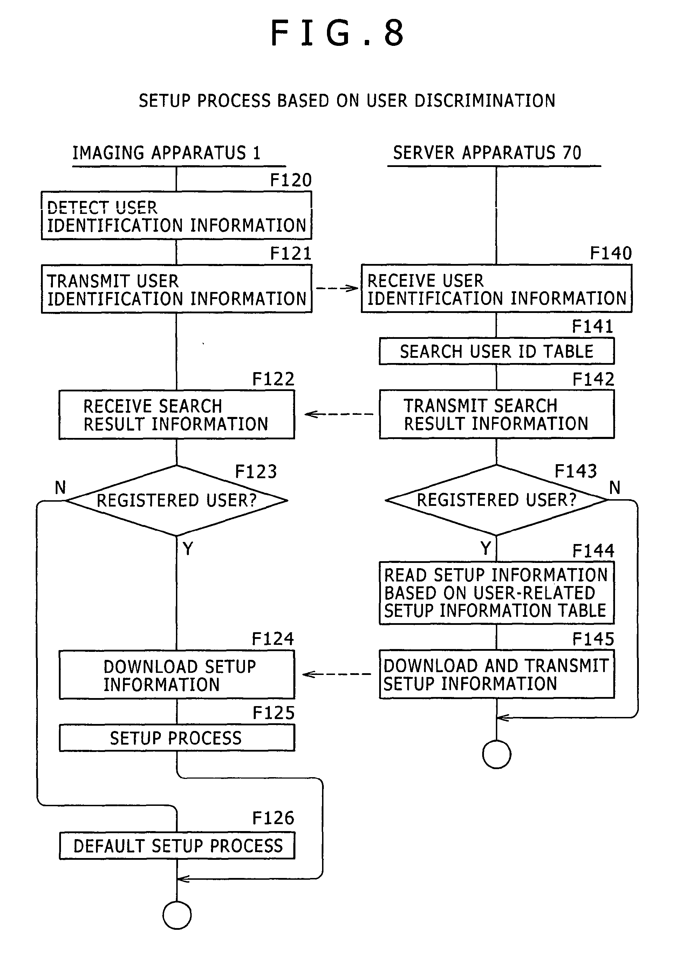

First, examples of setup based on user discrimination will be described with reference to FIGS. 7 and 8. That is, the image capture system will be set up on a user-by-user basis in these examples.

FIG. 7 illustrates the setup process handled by the system controller 10 in the imaging apparatus 1 shown in FIG. 3.

The system controller 10 detects user identification information in step F100 of FIG. 7. In the case of the imaging apparatus 1 as illustrated in FIGS. 1A and 1B, for example, the system controller 10 obtains the user's biological information detected by the biological sensor 21 in step F100 when the user wears the imaging apparatus 1. In the case of the imaging apparatus 1 as illustrated in FIGS. 1C and 1D, on the other hand, the system controller 10 need only obtain the user's biological information detected by the biological sensor 21 in step F100 when the user holds the imaging apparatus 1.

Then, the system controller 10 generates user's personal identification information (user identification information) from detected biological information.

In the following step F101, the system controller 10 refers to the user ID table 51 in the setup information storage section 24 using the user identification information which it has generated from detected biological information. By doing so, the system controller 10 checks whether or not the user ID associated with the generated user identification information is registered. That is, the system controller 10 determines whether or not the user currently wearing (or holding) the imaging apparatus 1 has registered setup information to his/her liking.

It should be noted that user discrimination is achieved using user identification information based on biological information. However, if the user enters a code number or other number as the user ID from the operation input section 20, the system controller 10 need only load the entered code number as user identification information in step F100 and check whether or not the code number is registered with the user ID table 51 as the user ID in step F101.

If the user ID obtained by biological information detection or user input is not registered with the user ID table 51, the system controller 10 proceeds from step F102 to step F105 where it sets up the image capture system to default settings. In this case, default settings need only be ordinary settings of parameters, specification data and other data made available in advance.

On the other hand, when the user ID is registered, the system controller 10 proceeds from step F102 to step F103. In this step, the system controller 10 refers to the user-related setup information table 52 in the setup information storage section 24. By doing so, the system controller 10 identifies setup information associated with the user ID and reads the setup information shown in the user-related setup information table 52 from the setup information storage area 50.

In step F104, the system controller 10 proceeds with setup of the image capture system based on the setup information read from the setup information storage section 24.

Next, the setup process using the imaging apparatus 1 in FIG. 4 and the server apparatus 70 in FIG. 5 will be described with reference to FIG. 8. FIG. 8 illustrates the process handled by the system controller 10 in the imaging apparatus 1 and that handled by the server control section 72 in the server apparatus 70.

The system controller 10 detects user identification information in step F120 of FIG. 8 as it does in step F100 of FIG. 7. For example, the system controller 10 obtains user's biological information detected by the biological sensor 21 or loads a code number entered by the user as the user ID from the operation input section 20.

It should be noted that if the imaging system has a number of the imaging apparatuses 1 communicating with the server apparatus 70, the system controller 10 may use identification information of the imaging apparatuses 1 (e.g., serial number) as user identification information.

After detection of user identification information, the system controller 10 uses the communication section 26 to transmit the user identification information to the server apparatus 70 in step F121.

The server control section 72 of the server 70 receives the user identification information from the imaging apparatus 1 in step F140. That is, the server control section 72 loads the user identification information received by the communication section 73.

Then, the server control section 72 refers to the user ID table 51 in the setup information storage section 71 using the user identification information received. By doing so, the server control section 72 checks whether or not the user ID associated with the received user identification information is registered. That is, the server control section 72 determines whether or not the user currently wearing (or holding) the imaging apparatus 1 has registered setup information to his/her liking.

In step F142, the server control section 72 notifies the imaging apparatus 1 of the result of search in the user ID table 51. That is, the server control section 72 uses the communication section 73 to transmit, to the server apparatus 70, the determination result as to whether or not the user currently using the imaging apparatus 1 is registered.

If the user has yet to be registered with the user ID table 51, the server control section 72 terminates the process in step F143.

In the imaging apparatus 1, on the other hand, when the determination result is received as to whether the user is registered in step F122, the system controller 10 checks the determination result. If the user is not registered, the system controller 10 advances the process from step F123 to F126 where it sets up the image capture system to default settings. In this case, default settings need only be ordinary settings of parameters, specification data and other data made available in advance.

When determining, as a result of search in the user ID table 51, that the user currently using the imaging apparatus 1 is registered, the server control section 72 advances the process from step F143 to F144. In step F144, the server control section 72 refers to the user-related setup information table 52 in the setup information storage section 71. By doing so, the server control section 72 identifies setup information associated with the user ID and reads the setup information shown in the user-related setup information table 52 from the setup information storage area 50.

In step F145, the server control section 72 downloads and transmits the setup information read from the setup information storage section 71 to the imaging apparatus 1.

In the imaging apparatus 1, upon detecting, through reception of a notice in step F122 that the user has been confirmed to be registered by the server apparatus 70, the system controller 10 advances the process from step F123 to F124.

Then, the system controller 10 downloads the setup information transmitted as a result of the process performed in the server apparatus 70 in step F145.

When the setup information is obtained at the completion of the download in step F124, the system controller 10 sets up the image capture system in step F125 based on the obtained setup information.

As described above, as a result of the setup process illustrated in FIG. 7 or 8, the image capture system of the imaging apparatus 1 is set up to fit the needs of the user using the imaging apparatus 1. For example, parameters may be set to suit the preferences of the user. Alternatively, specific functional specifications may be enabled or disabled. Still alternatively, software may be enabled to perform specific operations.

That is, the imaging apparatus 1 is set up to match the us-er's needs in regards to imaging operation and functionality.

For example, functions are enabled or disabled differently to suit different users; some requiring only basic functions and others eager to make full use of available functions. Alternatively, parameters are set up to suit the user's preference in imaging quality.

In particular, use of biological information as user identification information ensures that the imaging apparatus 1 is suitably tailored to the user as he or she simply wears (or holds) it.

### [5. Setup Process According to Date/time]

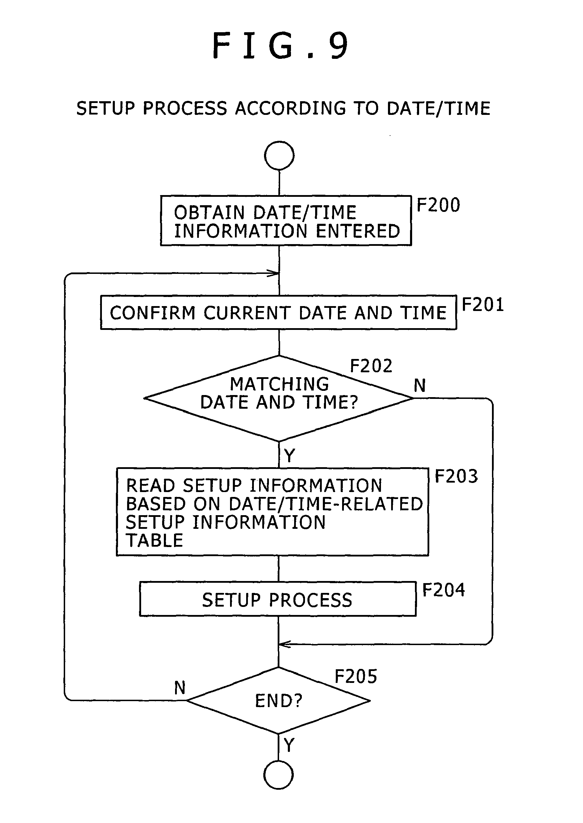

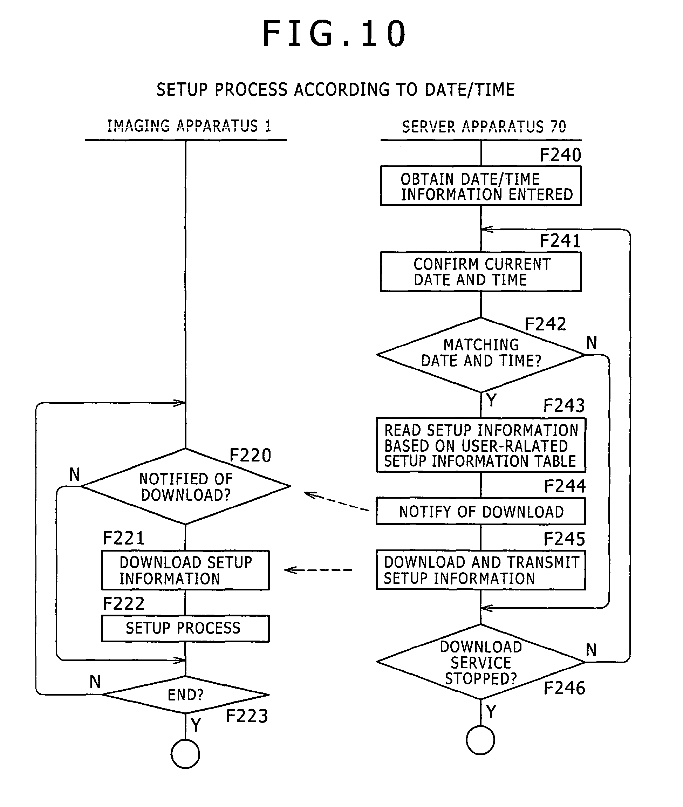

A description will be made below about setup processes according to date/time with reference to FIGS. 9 and 10.

FIG. 9 illustrates the setup process handled by the system controller 10 in the imaging apparatus 1 shown in FIG. 3.

First, the system controller 10 obtains entered date/time information from the setup information storage section 24 in step F200 of FIG. 9. Entered date/time information refers to specific date/time information (e.g., time, week, day, period, season, morning, afternoon, evening or night) registered with the date/time-related setup information table 53 of the setup information storage section 24. That is, this information refers to specific date/time information showing associated setup information.

In step F201, the system controller 10 confirms the current date and time (year, month, day, hours, minutes and seconds) calculated by the date/time calculation section 18.

In step F202, the system controller 10 determines whether the current date and time matches at least one of the dates and times included in the date/time information entered.

If there is no matching date and time, the system controller 10 returns to step F201 via step F205.

When the current date and time matches one of the dates and times entered, the system controller 10 proceeds from step F202 to F203. Then, the system controller 10 refers to the date/time-related setup information table 53 in the setup information storage section 24. By doing so, the system controller 10 identifies setup information associated with the current date and time (entered date and time) and reads the setup information shown in the date/time-related setup information table 53 from the setup information storage area 50.

In step F204, the system controller 10 sets up the image capture system based on the setup information read from the setup information storage section 24.

The above setup process steps are repeated until the setup is determined to be terminated in step F205. It should be noted that the setup may be determined to be terminated, for example, if the imaging apparatus 1 is powered off, if the user removes the imaging apparatus 1 or if the automatic setup control function illustrated in FIG. 9 is disabled.

Next, the setup process using the imaging apparatus 1 in FIG. 4 and the server apparatus 70 in FIG. 5 will be described with reference to FIG. 10.

In this case, the server control section 72 of the server apparatus 70 obtains entered date/time information from the setup information storage section 71 in step F240. In this case also, entered date/time information refers to specific date/time information (e.g., time, week, day, period, season, morning, afternoon, evening or night) registered with the date/time-related setup information table 53 of the setup information storage section 71.

In step F241, the server control section 72 confirms the current date and time (year, month, day, hours, minutes and seconds) calculated by the date/time-calculation section 74.

In step F242, the server control section 72 determines whether or not the current date and time matches at least one of the dates and times included in the date/time information entered.

If there is no matching date and time, the server control section 72 returns to step F241 via step F246.

When the current date and time matches one of the dates and times entered, the server control section 72 proceeds from step F242 to F243. Then, the server control section 72 refers to the date/time-related setup information table 53 in the setup information storage section 71. By doing so, the server control section 72 identifies setup information associated with the current date and time (entered date and time) and reads the setup information shown in the date/time-related setup information table 53 from the setup information storage area 50.

In step F244, the server control section 72 notifies the imaging apparatus 1 of download. That is, the server control section 72 uses the communication section 73 to notify the imaging apparatus 1 that setup information will be downloaded and transmitted. By doing so, the server control section 72 requests the imaging apparatus 1 to handle the download.

In step F245, the server control section 72 downloads and transmits the setup information read from the setup information storage section 71 to the imaging apparatus 1.

In the imaging apparatus 1, upon receiving a download notice in step F220, the system controller 10 advances the process to step F221 where it will proceed with the download of setup information transmitted from the server apparatus 70 as a result of the process in step F245.

When the setup information is obtained at the completion of the download, the system controller 10 sets up the image capture system in step F222 based on the obtained setup information.

After the completion of the download and transmission in step F245, the server control section 72 returns to step F241 to repeat the same process steps until the download service is stopped in step F246.

On the other hand, the system controller 10 of the imaging apparatus 1 repeats the process steps F220 to F222 until the setup is determined to be terminated in step F223. It should be noted that the setup may be determined to be terminated, for example, if the imaging apparatus 1 is powered off, if the user removes the imaging apparatus 1 or if the automatic setup control function illustrated in FIG. 10 is disabled.

As a result of the setup process illustrated in FIG. 9 or 10, the imaging apparatus 1 is set up to perform imaging operation properly to match a specific time, specific week, specific day, specific period, specific season, or with morning, afternoon, evening or night.

For example, parameters such as imaging sensitivity and brightness level can be automatically set according to the external brightness during a time zone such as in the morning, afternoon or evening.

Further, specific functions (e.g., night vision and ultraviolet imaging functions) or specific image processing programs can be enabled or disabled only during a specific time zone.

Still further, image capture can be disabled during a specific time zone.

Still further, image processing parameters and image effects can be set up to match the season (spring, summer, fall or winter) to add a sense of the season to the captured image. For example, one may add a soft-focus effect to the image in spring, increase the brightness level in summer, or change the image to fall-like color in fall. Naturally, it would be possible to process the image to match a specific time zone of the day such as in the early morning, morning, afternoon, evening or late night.

In the setup process illustrated in FIG. 10, the server apparatus 70 confirms the current date and time and requests the imaging apparatus 1 to download setup information on the date and time entered. Conversely to this, the imaging apparatus 1 may acquire the entered date and time information from the server apparatus 70 in advance so that the imaging apparatus 1 confirms the current date and time and requests a download to the server apparatus 70 on the date and time entered. [6. Setup Process According to Position]

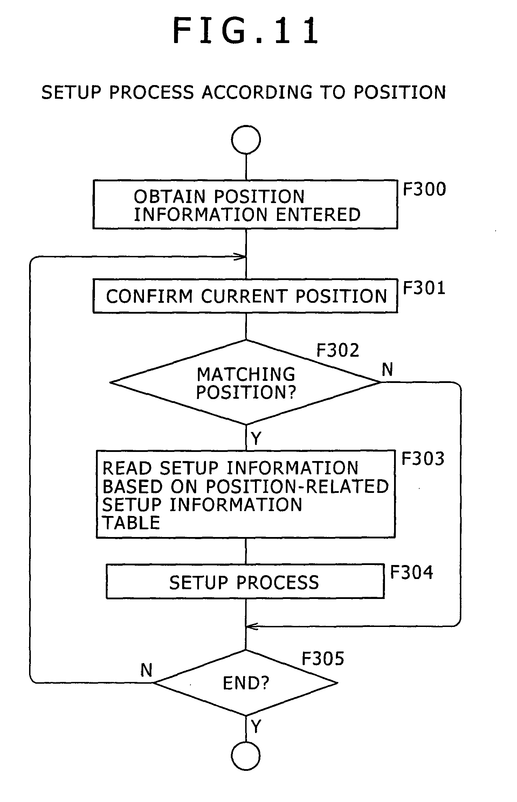

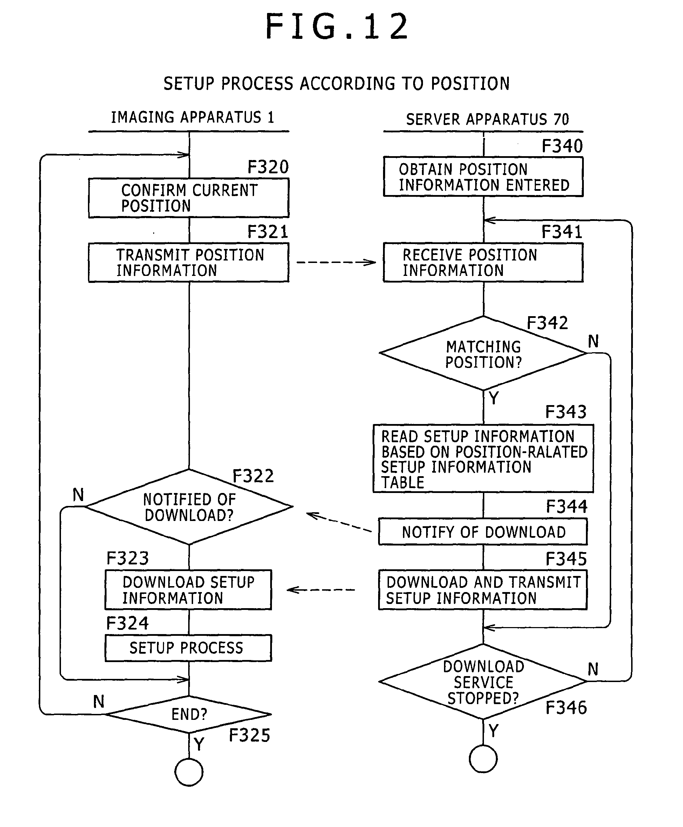

Next, a description will be made about setup processes according to position with reference to FIGS. 11 and 12.

FIG. 11 illustrates the setup process handled by the system controller 10 in the imaging apparatus 1 shown in FIG. 3.

First, the system controller 10 obtains entered position information from the setup information storage section 24 in step F300 of FIG. 11. Entered position information refers to position information registered with the position-related setup information table 54 of the setup information storage section 24. This information refers to position information representing a specific or unspecific location.

Among specific locations are not only facilities such as a park, amusement park, sports stadium, theme park, museum, concert hall, store, event site and station, but also a specific tourist spot, specific city, town or village, and a specific district.

Among unspecific locations are seashore, mountainous region, highland, urban area and highway.

These pieces of position information need only be entered into the position-related setup information table 54 in the form of latitude and longitude information (or information regarding latitude and longitude ranges).

In step F301, the system controller 10 confirms the current position information (latitude and longitude) detected by the GPS receiver section 19.

In step F302, the system controller 10 determines whether or not the current position matches at least one of the positions included in the position information entered.

If there is no matching position, the system controller 10 returns to step F301 via step F305.

When the current position matches one of the positions entered, the system controller 10 proceeds from step F302 to F303. Then, the system controller 10 refers to the position-related setup information table 54 in the setup information storage section 24. By doing so, the system controller 10 identifies setup information associated with the current position (entered position) and reads the setup information shown in the position-related setup information table 54 from the setup information storage area 50.

In step F304, the system controller 10 sets up the image capture system based on the setup information read from the setup information storage section 24.

The above setup process steps are repeated until the setup is determined to be terminated in step F305. It should be noted that the setup may be determined to be terminated, for example, if the imaging apparatus 1 is powered off, if the user removes the imaging apparatus 1 or if the automatic setup control function illustrated in FIG. 11 is disabled.

Next, the setup process using the imaging apparatus 1 in FIG. 4 and the server apparatus 70 in FIG. 5 will be described with reference to FIG. 12.

In this case, the server control section 72 of the server apparatus 70 obtains entered position information from the setup information storage section 71 in step F340. In this case also, entered position information refers to position information registered with the position-related setup information table 54 of the setup information storage section 71.

In step F320, on the other hand, the system controller 10 of the imaging apparatus 1 confirms the current position information (latitude and longitude) detected by the GPS receiver section 19. In step F321, the system controller 10 uses the communication section 26 to transmit the detected position information to the server apparatus 70.

In the server apparatus 70, the server control section 72 loads, in step F341, the current position information received by the communication section 73 from the imaging apparatus 1.

In step F342, the server control section 72 determines whether or not the current position of the imaging apparatus 1 matches at least one of the positions included in the position information entered.

If there is no matching position, the server control section 72 returns to step F341 via step F346.

When the current position matches one of the positions entered, the server control section 72 proceeds from step F342 to F343. Then, the server control section 72 refers to the position-related setup information table 54 in the setup information storage section 71. By doing so, the server control section 72 identifies setup information associated with the current position (entered position) and reads the setup information shown in the position-related setup information table 54 from the setup information storage area 50.

In step F344, the server control section 72 notifies the imaging apparatus 1 of download. That is, the server control section 72 uses the communication section 73 to notify the imaging apparatus 1 that setup information will be downloaded and transmitted. By doing so, the server control section 72 requests the imaging apparatus 1 to handle the download.

In step F345, the server control section 72 downloads and transmits the setup information read from the setup information storage section 71 to the imaging apparatus 1.

In the imaging apparatus 1, upon receiving a download notice in step F322, the system controller 10 advances the process to step F323 where it will proceed with the download of setup information transmitted from the server apparatus 70 as a result of the process in step F345.

When the setup information is obtained at the completion of the download, the system controller 10 sets up the image capture system in step F324 based on the obtained setup information.

After the completion of the download and transmission in step F345, the server control section 72 returns to step F341 to repeat the same process steps until the download service is stopped in step F346.

The system controller 10 of the imaging apparatus 1 repeats the process steps F320 to F324 until the setup is determined to be terminated in step F325. It should be noted that the setup may be determined to be terminated, for example, if the imaging apparatus 1 is powered off, if the user removes the imaging apparatus 1 or if the automatic setup control function illustrated in FIG. 12 is disabled.

As a result of the setup process illustrated in FIG. 11 or 12, the imaging apparatus 1 is set up to perform imaging operation properly to match the position (location).

For example, imaging parameters can be automatically set up, for example, to match the position (location) such as a seashore, mountainous region, highland or urban area.

Further, an image effect can be applied to match the atmosphere according to the environment of the district. For example, an image effect can be added to make the image sepia at a historic facility.

Still further, a specific function or image processing program can be enabled or disabled at a specific location.

For example, high frame-rate image capture can be enabled at a specific sports stadium. Alternatively, image capture can be disabled at a certain concert hall. Still alternatively, the night vision imaging function or a specific image processing program can be enabled at a specific location such as a certain theme park, store or event site.

### [7. Setup Process According to Date/time and Position]

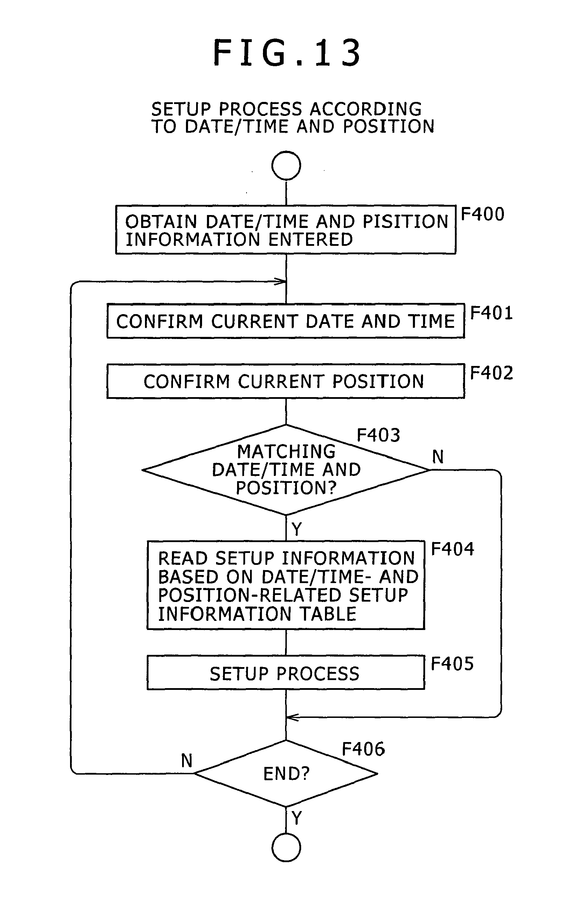

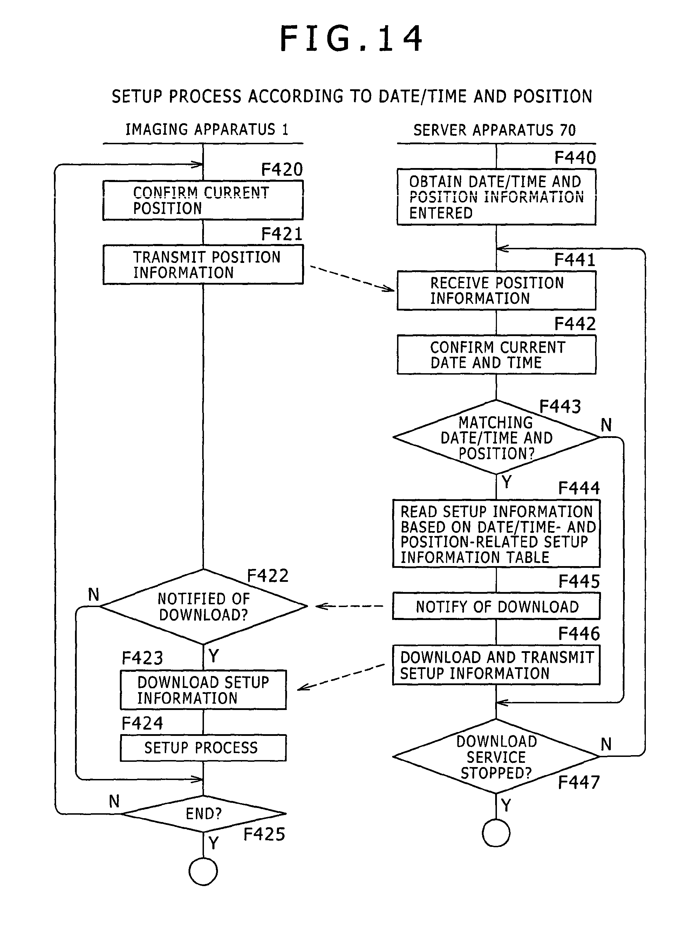

Next, a description will be made about setup processes according to date/time and position with reference to FIGS. 13 and 14.

FIG. 13 illustrates the setup process handled by the system controller 10 in the imaging apparatus 1 shown in FIG. 3.

First, the system controller 10 obtains entered date/time and position information from the setup information storage section 24 in step F400 of FIG. 13. Entered date/time and position information refers to a combination of date/time information and position information registered with the date/time and position-related setup information table 55 of the setup information storage section 24. That is, each entry includes information representing a specific date/time and location. More specifically, this information includes a combination of date/time (specific date/time or time zone) and latitude/longitude information (or information regarding latitude and longitude ranges).

In step F401, the system controller 10 confirms the current date and time (year, month, day, hours, minutes and seconds) calculated by the date/time calculation section 18. In step F402, the system controller 10 confirms the current position information (latitude and longitude) detected by the GPS receiver section 19.

In step F403, the system controller 10 determines whether the combination of current date, time and position matches at least one of the combinations of date, time and position included in the date/time and position information entered.

If there is no matching combination of date, time and position, the system controller 10 returns to step F401 via step F406.

When the combination of current date, time and position matches one of the combinations of date, time and position entered, the system controller 10 proceeds from step F403 to F404. Then, the system controller 10 refers to the date/time and position-related setup information table 55 in the setup information storage section 24. By doing so, the system controller 10 identifies setup information associated with the combination of current date, time and position (entered date, time and position) and reads the setup information shown in the date/time and position-related setup information table 55 from the setup information storage area 50.

In step F405, the system controller 10 sets up the image capture system based on the setup information read from the setup information storage section 24.

The above setup process steps are repeated until the setup is determined to be terminated in step F406. It should be noted that the setup may be determined to be terminated, for example, if the imaging apparatus 1 is powered off, if the user removes the imaging apparatus 1 or if the automatic setup control function illustrated in FIG. 13 is disabled.

Next, the setup process using the imaging apparatus 1 in FIG. 4 and the server apparatus 70 in FIG. 5 will be described with reference to FIG. 14.

In this case, the server control section 72 of the server apparatus 70 obtains entered date/time and position information from the setup information storage section 71 in step F440. In this case also, entered date/time and position information refers to combinations of date, time and position registered with the date/time and position-related setup information table 55 of the setup information storage section 71.

In step F420, the system controller 10 of the imaging apparatus 1 confirms the current position information (latitude and longitude) detected by the GPS receiver section 19.

In step F421, the system controller 10 uses the communication section 26 to transmit the detected position information to the server apparatus 70.

In the server apparatus 70, the server control section 72 loads, in step F441, the current position information received by the communication section 73 from the imaging apparatus 1.

In step F442, the server control section 72 confirms the current date and time calculated by the date/time calculation section 74.

In step F443, the server control section 72 determines whether or not the combination of current position of the imaging apparatus 1 and current date and time matches at least one of the combinations of date, time and position included in the date/time and position information entered.

If there is no matching combination of date, time and position, the server control section 72 returns to step F441 via step F447.

When the combination of current date and time and current position of the imaging apparatus 1 matches one of the combinations of date, time and position entered, the server control section 72 proceeds from step F443 to F444. Then, the server control section 72 refers to the date/time and position-related setup information table 55 in the setup information storage section 71. By doing so, the server control section 72 identifies setup information associated with the current date and time and current position of the imaging apparatus 1 (entered date, time and position) and reads the setup information shown in the date/time and position-related setup information table 55 from the setup information storage area 50.

In step F445, the server control section 72 notifies the imaging apparatus 1 of download. That is, the server control section 72 uses the communication section 73 to notify the imaging apparatus 1 that setup information will be downloaded and transmitted. By doing so, the server control section 72 requests the imaging apparatus 1 to handle the download.

In step F446, the server control section 72 downloads and transmits the setup information read from the setup information storage section 71 to the imaging apparatus 1.

In the imaging apparatus 1, upon receiving a download notice in step F422, the system controller 10 advances the process to step F423 where it will proceed with the download of setup information transmitted from the server apparatus 70 as a result of the process in step F446.

When the setup information is obtained at the completion of the download, the system controller 10 sets up the image capture system in step F424 based on the obtained setup information.

After the completion of the download and transmission in step F446, the server control section 72 returns to step F441 to repeat the same process steps until the download service is stopped in step F447.

The system controller 10 of the imaging apparatus 1 repeats the process steps F420 to F424 until the setup is determined to be terminated in step F425 (e.g., termination by power-off).

As a result of the setup process illustrated in FIG. 13 or 14, the imaging apparatus 1 is set up to perform imaging operation properly to match the date/time and position (location).

For example, suitable imaging parameters can be set automatically to match a specific tourist spot, or a mountainous region, highland or urban area, or a different season or month.

Further, a special effect can be added to the image at an event site or concert hall only during a specific time zone.

Still further, image capture can be disabled or enabled at a specific location such as concert hall or theater only during a specific time zone. [8. Setup Process Based on User Selection]

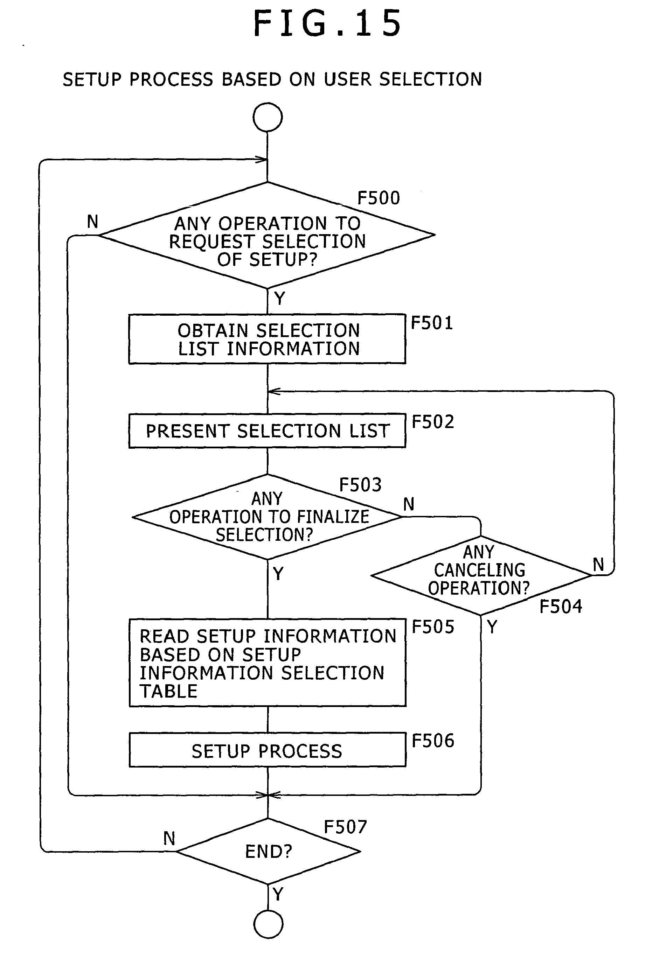

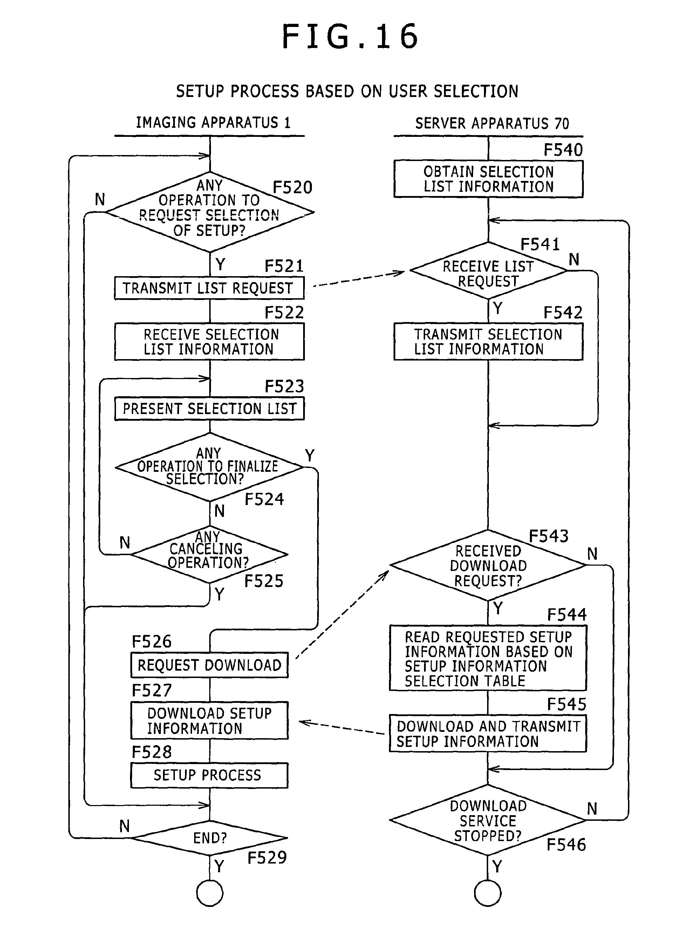

Next, a description will be made about setup processes based on user selection with reference to FIGS. 15 and 16.

FIG. 15 illustrates the setup process handled by the system controller 10 in the imaging apparatus 1 shown in FIG. 3.

In step F500, the system controller 10 monitors whether any operation has been made to request selection of setup until the setup is determined to be terminated in step F507 (e.g., termination by power-off).

When the user performs an operation to request selection of setup from the operation input section 20, the system controller 10 proceeds to step F501 where it will obtain selection list information from the setup information storage section 24. Selection list information refers to information regarding user-selectable options (namely, options each of which shows associated setup information) registered with the setup information selection table 56.

After the selection list information is obtained, the system controller 10 uses the display section 2 to display a selection list based on the selection list information in step F502. In steps F503 and F504, the system controller 10 waits for user operation.

The user looks at the selection list shown on the display section 2 and performs an operation to select his or her desired option.

It should be noted that if the user performs a canceling operation, the system controller 10 advances the process from step F504 to F507 and then returns the process back to step F500.

When the user performs an operation to finalize the selection of an option, the system controller 10 advances the process from step F503 to F505 as it has obtained information which specifies the option selected by the user. Then, the system controller 10 refers to the setup information selection table 56 in the setup information storage section 24. By doing so, the system controller 10 identifies setup information associated with the option selected by the user and reads the setup information from the setup information storage area 50.

In step F506, the system controller 10 sets up the image capture system based on the setup information read from the setup information storage section 24.

Next, the setup process using the imaging apparatus 1 in FIG. 4 and the server apparatus 70 in FIG. 5 will be described with reference to FIG. 16.

In this case, the server control section 72 of the server apparatus 70 obtains selection list information from the setup information storage section 71 in step F540.

In step F520, the system controller 10 monitors whether any operation has been made to request selection of setup until the setup is determined to be terminated in step F529 (e.g., termination by power-off).

When the user performs an operation to request selection of setup from the operation input section 20, the system controller 10 proceeds to step F521 where it will use the communication section 26 to transmit a list request to the server apparatus 70.

In the server apparatus 70, the communication section 73 receives the list request from the imaging apparatus 1. The server control section 72 checks in step F541 whether the list request has been received. If so, the server control section 72 transmits selection list information in step F542. That is, the server control section 72 uses the communication section 73 to transmit the selection list information to the imaging apparatus 1.

The imaging apparatus 1 receives the selection list information from the server apparatus 70. In step F522, the system controller 10 loads the received selection list information.

After the selection list information is obtained, the system controller 10 uses the display section 2 to display a selection list based on the selection list information in step F523. In steps F524 and F525, the system controller 10 waits for user operation.

The user looks at the selection list shown on the display section 2 and performs an operation to select his or her desired option.

It should be noted that if the user performs a canceling operation, the system controller 10 advances the process from step F525 to F529 and then returns the process back to step F520.

When the user performs an operation to finalize the selection of an option, the system controller 10 advances the process from step F524 to F526 as it has obtained information which specifies the option selected by the user. Then, the system controller 10 uses the communication section 26 to transmit a download request to the server apparatus 70. That is, the system controller 10 uses the communication section 26 to transmit the information specifying the user-selected option and download request information to the server apparatus 70.

In the server apparatus 70, the communication section 73 receives the download request from the imaging apparatus 1. The server control section 72 checks in step F543 whether the download request has been received. If so, the server control section 72 proceeds to step F544 where it will refer to the setup information storage section 71. By doing so, the server control section 72 identifies setup information associated with the information specifying the user-selected option shown in the download request and reads the setup information from the setup information storage area 50.

In step F545, the server control section 72 downloads and transmits the setup information from the setup information storage section 71 to the imaging apparatus 1.

In the imaging apparatus 1, the system controller 10 proceeds, in step F527, with the download of setup information transmitted from the server apparatus 70 as a result of the process in step F545.

When the setup information is obtained at the completion of the download, the system controller 10 sets up the image capture system in step F528 based on the obtained setup information.

After the completion of the download and transmission in step F545, the server control section 72 returns to step F541 to repeat the same process steps until the download service is stopped in step F546.

The system controller 10 of the imaging apparatus 1 repeats the process steps F520 to F528 until the setup is determined to be terminated in step F529 (e.g., termination by power-off).

As a result of the setup process illustrated in FIG. 15 or 16, the imaging apparatus 1 is set up to perform imaging operation properly based on the user selection.

For example, those setups to the liking of professional photographers A, B and C, are made available in the form of parameters and functions relating to the imaging and image processing operation. In addition, imaging options in the style of photographers A, B and C, are also made available for the user to choose. This allows for the user to achieve image capture as recommended by or as would be done by his or her favorite photographer.

Further, if setups are made available in the form of sets of parameters tailored to different imaging qualities of different camera manufacturers, and if these sets of parameters are presented to the user for selection, the user can achieve image capture according to the specification of his or her favorite camera manufacturer.

Alternatively, sets of parameters tailored to the user's sex or age, for example, may be made available and presented to the user for selection.

### [9. Setup Process According to Biological Status]

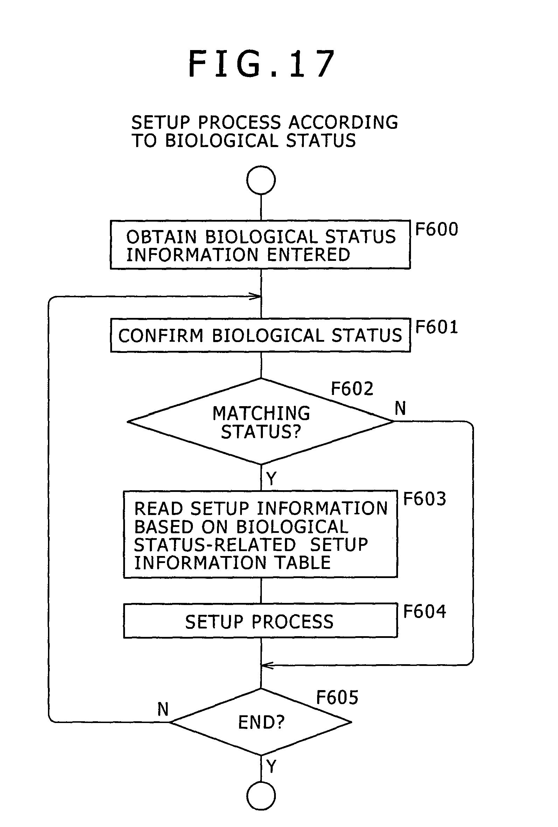

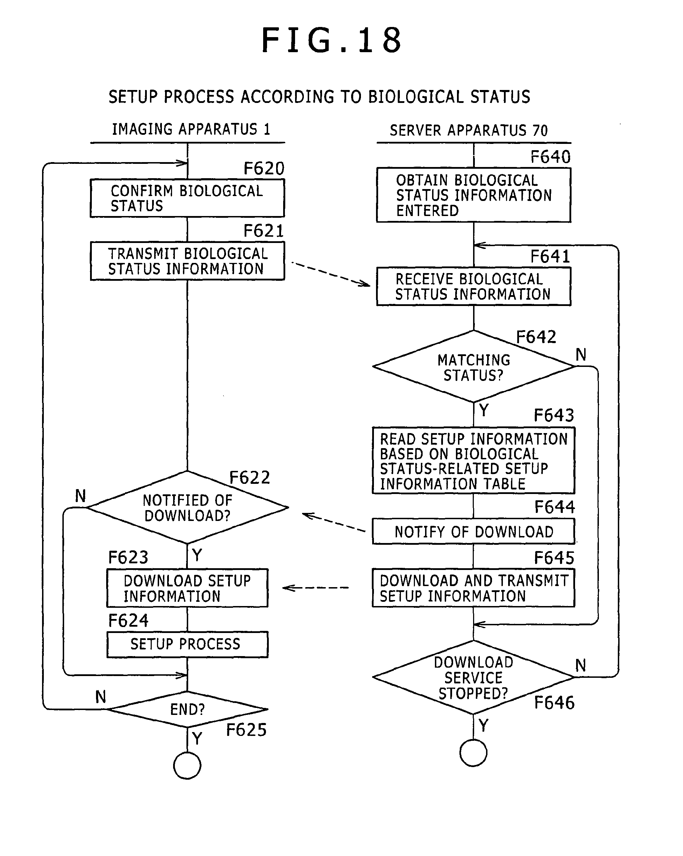

Next, a description will be made about setup processes according to biological status with reference to FIGS. 17 and 18.

FIG. 17 illustrates the setup process handled by the system controller 10 in the imaging apparatus 1 shown in FIG. 3.

First, the system controller 10 obtains entered biological status information from the setup information storage section 24 in step F600 of FIG. 17. Entered biological status information refers to biological status information registered with the biological status-related setup information table 57 of the setup information storage section 24. Biological status information refers to information regarding the user's bodily or emotional condition which represents the user's emotion such as enjoyment, fun, joy, sadness, fear, peacefulness, nostalgia, impression, astonishment, excitement or tension, and the user's action such as being at rest, walking, running, exercising or sleeping.

In step F601, the system controller 10 confirms the user's biological status. That is, the system controller 10 determines the user's biological status based on various types of biological information detected by the biological sensor 21 or information detected by an acceleration, angular velocity, vibration or other sensor.

In step F602, the system controller 10 determines whether or not the entered biological status information matches at least one of the biological statuses included in the biological status information entered.

If there is no matching biological status, the system controller 10 returns to step F601 via step F605.

When the user's current biological status matches one of the biological statuses entered, the system controller 10 proceeds from step F602 to F603. Then, the system controller 10 refers to the biological status-related setup information table 57 in the setup information storage section 24. By doing so, the system controller 10 identifies setup information associated with the current biological status (entered biological status) and reads the setup information from the setup information storage area 50.

In step F604, the system controller 10 sets up the image capture system based on the setup information read from the setup information storage section 24.

The system controller 10 repeats the above process steps until the setup is determined to be terminated in step F605 (e.g., termination by power-off).

Next, the setup process using the imaging apparatus 1 in FIG. 4 and the server apparatus 70 in FIG. 5 will be described with reference to FIG. 18.

In this case, the server control section 72 of the server apparatus 70 obtains entered biological status information from the setup information storage section 71 in step F640. In this case also, entered biological status information refers to biological status information registered with the biological status-related setup information table 57 of the setup information storage section 71.

In step F620, the system controller 10 of the imaging apparatus 1 confirms the user's biological status.

Next in step F621, the system controller 10 uses the communication section 26 to transmit the detected current biological status of the user to the server apparatus 70.

In the server apparatus 70, the server control section 72 loads, in step F641, the user's current biological status information received by the communication section 73 from the imaging apparatus 1.

In step F642, the server control section 72 determines whether the user's biological status matches at least one of the biological statuses entered.

If there is no matching biological status, the server control section 72 returns to step F641 via step F646.

When the user's biological status matches one of the biological statuses entered, the server control section 72 proceeds from step F642 to F643. Then, the server control section 72 refers to the biological status-related setup information table 57 in the setup information storage section 71. By doing so, the server control section 72 identifies setup information associated with the user's biological status (entered biological status) and reads the setup information from the setup information storage area 50.

In step F644, the server control section 72 notifies the imaging apparatus 1 of download. That is, the server control section 72 uses the communication section 73 to notify the imaging apparatus 1 that setup information will be downloaded and transmitted. By doing so, the same section 72 requests the imaging apparatus 1 to handle the download.

In step F645, the server control section 72 downloads and transmits the setup information read from the setup information storage section 71 to the imaging apparatus 1.

In the imaging apparatus 1, upon receiving a download notice in step F622, the system controller 10 advances the process to step F623 where it will proceed with the download of setup information transmitted from the server apparatus 70 as a result of the process in step F645.

When the setup information is obtained at the completion of the download, the system controller 10 sets up the image capture system in step F624 based on the obtained setup information.

After the completion of the download and transmission in step F645, the server control section 72 returns to step F641 to repeat the same process steps until the download service is stopped in step F646.

The system controller 10 of the imaging apparatus 1 repeats the process steps F620 to F624 until the setup is determined to be terminated in step F625 (e.g., termination by power-off).

As a result of the setup process illustrated in FIG. 17 or 18, the imaging apparatus 1 is set up to perform imaging operation according to the user's emotion, action or other status. That is, parameters are set, functions enabled or disabled, or image processing programs started according to the emotion or action of the user.

For example, a bright image can be captured when the user is having fun, and a dark image when the user is sad.

Further, an image effect can be added when the user is in a given emotional condition. For example, an image effect can be applied to the image to express astonishment when the user is astonished.

Still further, high-quality image capture can be achieved irrespective of the user's action by changing the frame rate or the blur correction amount between when the user is standing still and when walking.

### [10. Effects of the Embodiment, and Modification and Expansion Examples]

As described above, the imaging apparatus 1 (the imaging apparatus 1 and the server apparatus 70) of the present embodiment permits setup of the imaging operation on a user-by-user basis, to suit the user's preference, according to date/time or position, and according to the user's bodily or emotional condition.

This makes it possible to accomplish image capture tailored to wide ranging needs and circumstances of the user, namely, image capture adapted to the user's preference or circumstance, or image capture which is entertaining or effective in light of the circumstances. Further, image capture can be restricted as circumstances demand.

In the description of the present embodiment, examples of setup processes were given, namely, those based on user discrimination, according to date/time, according to position, according to date/time and position, based on user selection and according to biological status. That is, individual user, date/time, position, date/time and position, user selection and biological status were given as conditions for selecting setup. However, setup processes based on other selection conditions are also possible.

For example, external weather conditions may be detected as a selection condition so that the imaging operation is set up according to the weather. Similarly, external temperature or humidity may be detected as a selection condition so that the imaging operation is set up according thereto.

When any of these other selection conditions is used, it is only necessary for the imaging apparatus 1 (or the server apparatus 70) to include sensor section or information acquisition section to detect that selection condition.

Further, various other setup processes based on different combinations of selection conditions are also possible.

If user discrimination is combined with position, the imaging operation can be set up in a specific manner only when a specific user uses the imaging apparatus 1 at a specific position.

If user discrimination is combined with date/time, the imaging operation can be set up in a specific manner only when a specific user uses the imaging apparatus 1 on a specific date and time.

Still further, when the imaging operation is set up based on user selection, user discrimination makes it possible to provide different user-selectable options to different users.

For parameters, specification data and algorithm software to be set up, various other possible examples are also possible.

On the other hand, the imaging apparatus 1 may include both configurations illustrated in FIGS. 3 and 4. That is, the imaging apparatus 1 may include not only the setup information storage section 24 adapted to acquire setup information within the apparatus itself but also the communication section 26 adapted to acquire setup information from the setup information storage section 71. In this case, various arrangements are possible to choose from which of the two storage sections, the internal setup information storage section 24 and the external setup information storage section 71, the setup information is to be acquired.

For example, the selection of the internal or external storage section may be made according to the selection condition used or based on user selection. Further, the selection may be made in accordance with the communication conditions.

It should be understood by those skilled in the art that various modifications, combinations, subcombinations and alterations may occur depending on design requirements and other factor in so far as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An imaging system comprising:
imaging means adapted to capture an image;
setup information storage means adapted to store setup information relating to the operational setup of the imaging means;
selection condition detection means adapted to detect a selection condition for selecting given setup information from the setup information storage means;
acquisition means adapted to acquire given setup information based on the selection condition; and
control means adapted to set up the operation of the imaging means based on the given setup information.

2. The imaging system according to claim 1, wherein
the imaging means is worn on the user's body so that the imaging means capture an image in the direction of the user's vision.

3. The imaging system according to claim 1, wherein:
the imaging means include an imaging lens; and
the control means set up the operation of the imaging lens based on the given setup information.

4. The imaging system according to claim 1, wherein:
the imaging means include an imaging device section; and
the control means set up the operation of the imaging device section based on the given setup information.

5. The imaging system according to claim 1, wherein:
the imaging means include an imaging signal processing section adapted to process an imaging signal obtained from the imaging device section; and
the control means set up the operation of the imaging signal processing section based on the given setup information.

6. The imaging system according to claim 1, wherein
the control means enable functions of the imaging means based on the given setup information.

7. The imaging system according to claim 1, wherein
the control means enable or disable the imaging operation of the imaging means based on the given setup information.

8. The imaging system according to claim 1, wherein:
the selection condition detection means detect current date/time information as a condition for selecting given setup information from the setup information storage means;
the acquisition means acquire given setup information associated with the current date/time information; and
the control means set up the operation of the imaging means based on the given setup information.

9. The imaging system according to claim 1, wherein:
the selection condition detection means detect identification information identifying a user performing image capture as a condition for selecting given setup information from the setup information storage means;
the acquisition means acquire given setup information associated with the user identification information; and
the control means set up the operation of the imaging means based on the given setup information.

10. An imaging system comprising
first and second pieces of equipment, wherein:
the first piece of equipment includes the imaging means, and the control means;
the second piece of equipment includes the setup information storage means, the selection condition detection means and the acquisition means;
the first and second pieces of equipment are capable of communicating data with each other; and
the control means acquire the setup information from the setup information storage means of the second piece of equipment.

11. The imaging system according to claim 10, wherein:
the first piece of equipment further includes position detection means adapted to detect a current position of the first piece of equipment;
the selection condition detection means detect position information detected by the position detection means as a condition for selecting given setup information from the setup information storage means; and
the acquisition means acquire given setup information associated with the position information.

12. The imaging system according to claim 11, wherein:
the selection condition detection means detect position information detected by the position detection means and current date/time information as conditions for selecting given setup information from the setup information storage means; and
the acquisition means acquire given setup information associated with the position information and the current date/time information.

13. The imaging system according to claim 11, wherein
when the first piece of equipment is positioned at a specific location, the control means disable the operation of the imaging means based on given setup information associated with the specific location.

14. An imaging method of an imaging system including setup information storage means and imaging means, the imaging method comprising the steps of:
detecting a condition for selecting given setup information from setup information stored in the setup information storage means;
acquiring setup information based on the selection condition detected by the selection condition detection step;
setting up the operation of the imaging means based on setup information acquired by the acquisition step; and
capturing an image using the imaging means based on the operational setup performed in the setup step.

15. The imaging method according to claim 14, wherein:
the selection condition detection step detects current date/time information as a condition for selecting given setup information from the setup information storage means;
the acquisition step acquires given setup information associated with the current date/time information; and
the setup step sets up the operation of the imaging means based on the setup information.

16. The imaging method according to claim 14, wherein:
the selection condition detection step detects identification information identifying a user performing image capture as a selection condition for selecting given setup information from the setup information storage means;
the acquisition step acquires given setup information associated with the user identification information; and
the setup step sets up the operation of the imaging means based on the given setup information.

17. The imaging method according to claim 14 further comprising the step of
detecting position information indicating where image capture takes place, wherein:
the selection condition detection step detects position information detected by the position detection step as a condition for selecting given setup information from the setup information storage means; and
the acquisition step acquires given setup information associated with the position information.

18. The imaging method according to claim 17, wherein:
the selection condition detection step detects position information detected by the position detection step and current date/time information as conditions for selecting given setup information from the setup information storage means; and
the acquisition step acquires given setup information associated with the position information and the current date/time information.

19. The imaging method according to claim 17, wherein
when image capture is determined to take place at a specific location, the imaging step disables imaging operation based on given setup information associated with the specific location.

20. An imaging system comprising:
an imaging section adapted to capture an image;
a setup information storage section adapted to store setup information relating to the operational setup of the imaging section;
a selection condition detection section adapted to detect a selection condition for selecting given setup information from the setup information storage section;
an acquisition section adapted to acquire given setup information based on the selection condition; and
a control section adapted to set up the operation of the imaging section based on the given setup information.
